(19) Europäisches Patentamt
European Patent Office
Office européen des brevets

(11) **EP 2 799 841 A1**

(12) **DEMANDE DE BREVET EUROPEEN**

(43) Date de publication:
**05.11.2014 Bulletin 2014/45**

(51) Int Cl.:
***G01N 21/35*** *(2014.01)*

(21) Numéro de dépôt: **13290099.4**

(22) Date de dépôt: **30.04.2013**

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**
Etats d'extension désignés:
**BA ME**

(71) Demandeur: **Topnir Systems SAS**
**13100 Aix en Provence (FR)**

(72) Inventeur: **La désignation de l'inventeur n'a pas encore été déposée**

(74) Mandataire: **De Kezel, Eric et al**
**Mathisen & Macara LLP**
**Communications House**
**South Street**
**Staines-upon-Thames**
**Middlesex, TW18 4PR (GB)**

(54) **Procede de caracterisation d'un produit par analyse spectrale topologique**

(57) Méthode de génération et d'optimisation d'une banque de données spectrales pouvant servir dans un procédé de caractérisation d'un produit cible par analyse spectrale topologique à partir d'un nombre limité d'étalons disponibles, méthode consistant dans une première étape à effectuer la même analyse spectrale sur les dits étalons, et à constituer à partir des spectres obtenus une banque de données spectrales A à plusieurs longueurs d'onde et/ou gammes de longueurs d'onde.

FIGURE 1

EP 2 799 841 A1

**Description**

La présente invention concerne un procédé de caractérisation d'un produit par analyse spectrale topologique.

La présente invention concerne également la constitution d'une banque de données spectrales élargie pouvant servir à la caractérisation améliorée d'un produit par analyse spectrale topologique.

Plus particulièrement, la présente invention concerne un procédé de caractérisation d'un produit par analyse spectrale topologique dans le proche infrarouge (« NIR »).

La présente invention concerne également un dispositif de caractérisation d'un tel produit par analyse spectrale topologique.

En particulier, la présente invention concerne la constitution d'une banque de données spectrales élargie pouvant servir à la caractérisation améliorée d'un produit par analyse spectrale topologique.

La caractérisation d'un produit selon la présente invention peut consister en une détermination et/ou une prédiction de toute caractéristique chimique, physique ou physico-chimique du dit produit et/ou l'identification d'un type et/ou famille de produits.

Le brevet EP0742900 de la Demanderesse constitue la référence du domaine en matière d'analyse spectrale topologique. Il y est décrit une méthode de détermination ou de prédiction d'une valeur Px, d'une propriété d'une matière X ou d'une propriété d'un produit résultant d'un procédé provenant de ladite matière ou du rendement dudit procédé, méthode qui consiste à mesurer l'absorption $D_ix$ de ladite matière à plus d'une longueur d'onde dans la région des 600 à 2 600 nm, à comparer les signaux indicateurs de ces absorptions ou leurs fonctions mathématiques avec des signaux indicateurs des absorptions Dim aux mêmes longueurs d'onde ou leurs fonctions mathématiques pour un certain nombre d'étalons S dans une banque pour lesquels on connaît ladite propriété ou rendement P, et à choisir dans la banque au moins un et de préférence au moins 2 étalons Sm ayant la propriété Pm, ledit étalon Sm ayant les valeurs moyennes les plus petites des valeurs absolues de la différence à chaque longueur d'onde i comprise entre le signal pour la matière et le signal pour l'étalon Sm en vue d'obtenir la valeur Px et à faire la moyenne desdites propriétés ou rendements Pm, lorsqu'on choisit plus d'un étalon Sm.

Bien que l'application de techniques d'analyse mathématique aux données spectrales ait été décrite dans le brevet EP0742900, le brevet US6897071 a également décrit l'intégration de l'utilisation de l'analyse topologique par NIR et les techniques des moindres carrés partiels au sein d'une seule approche chémométrique. En particulier, le brevet US6897071 revendique une méthode d'analyse d'une substance qui possède une absorption dans la région NIR, comprenant: une étape de récolte de données par l'acquisition d'un premier ensemble de données provenant de données spectroscopiques NIR d'échantillons en soumettant la substance a une spectroscopie NIR; une étape de génération de données par la génération d'un second ensemble de données provenant de données spectroscopiques NIR d'échantillons en soumettant le premier ensemble de données à une technique de régression par les moindres carres partiels ; et une étape d'identification par l'identification d'un composé de la substance au moyen d'une analyse topologique par NIR de ce second ensemble de données.

L'analyse spectrale topologique présente de nombreux avantages par rapport aux méthodes mathématiques régressives classiques. Les méthodes numériques décrites pour la modélisation des propriétés physico-chimiques de substances à base d'analyse spectrale sont de nature corrélative et impliquent des relations à caractère de régression entre la (ou les) propriété(s) étudiée(s). Parmi ces analyses à multiples variables on trouve la régression multilinéaire (MLR), la régression sur composant principal (PLR), la régression canonique et la régression des moindres carres partiels(PLS). Dans tous les cas, on cherche une relation entre la propriété et le spectre qui peut être linéaire mais qui est habituellement quadratique ou d'une forme algébrique supérieure comportant des coefficients de régression appliqués à chaque absorption. Hors, l'établissement de toute régression demande un étalonnage progressif, puisque l'approche est empirique et n'est pas soutenue par une théorie.

Ainsi, WO-A-9207326 décrit une méthode d'estimation de données de propriété et/ou de composition d'un échantillon de test, consistant à réaliser une mesure spectrale sur l'echantillon de test et à estimer les données de propriétés et/ou de composition de l'échantillon de test à partir de son spectre mesuré en se basant sur un modèle prédictif mettant les spectres de l'echantillon d'étalonnage en corrélation avec des données de propriété et/ou de composition desdits échantillons d'étalonnage, dans laquelle on réalise une détermination, en se basant sur un contrôle du spectre mesuré par rapport au modèle prédictif, pour savoir si le spectre mesuré se trouve dans la gamme des spectres d'échantillon d'étalonnage dans le modèle et une réponse est générée si le résultat du contrôle est négatif, cette réponse consistant en particulier à isoler l'échantillon de test, a l'analyser à l'aide d'une méthode séparée pour déterminer ses données de propriété et/ou de composition et à actualiser le modèle prédictif avec ces données et avec les données de mesure spectrale obtenues.

Ces techniques ont des inconvénients, dont le principal est la nécessité d'établir une corrélation forte entre le spectre et la propriété, et leur difficulté à traiter la synergie positive ou négative entre les composants contribuant à cette propriété. Par exemple, pour déterminer la composition chimique par exemple LINA (linéaire, isoparaffinique, naphténique, aromatique) dans une charge d'hydrocarbure alimentant un reformeur catalytique, on a décrit l'utilisation d'une technique PLS sur la base de spectres NIR. Le modèle marche bien sur l'ensemble d'étalonnage mais la réponse des modèles lorsqu'on ajoute des hydrocarbures purs, par exemple du cyclohexane, n'est pas satisfaisante, puisque le modèle prédit des variations en teneur d'isoparaffines et de naphtènes inverses de celles trouvées expérimentalement. De plus, il existe d'autres difficultés pratiques, principalement dues à la nécessité d'identifier des échantillons de familles ayant le même type de relation entre les spectres et les propriétés à modéliser. Ainsi, le modèle peut être limité, en particulier avec une relation non linéaire entre le spectre et la propriété. Surtout lorsqu'aux limites des données disponibles, la précision du modèle se réduit. La stabilité du modèle est également un problème, ainsi que la nécessité lors de l'addition de nouveaux étalons, de réaliser des révisions laborieuses pour obtenir le nouveau modèle, en particulier lorsqu'on ajuste a une nouvelle charge alimentant un procédé; ainsi le contrôle de 6 propriétés sur 4 produits sortant d'une unité de distillation demande 24 modèles, dont chacun doit être modifié pour chaque modification de la charge d'alimentation non comprise dans l'étalonnage. Un autre inconvénient majeur rencontré par ces techniques apparait lorsqu'un point à analyser se situe en dehors du modèle préalablement établi ; il faut alors générer une nouvelle base de données et un nouveau modèle par propriété ce qui rend ce type de technique non seulement peu réactive mais également nécessitant un nombre d'heures de travail beaucoup trop important.

US2010/0211329 décrit quant à lui une méthode et un dispositif pour la détermination de la classe, du grade et des propriétés d'échantillons de carburants - quel que soit la température ambiante, celle de l'instrumentation et/ou celle de l'échantillon - au moyen de corrélations mathématiques entre la classe, le grade et les propriétés des carburants et leurs spectres - en particulier leurs spectres Raman - à partir d'une base de données peuplée d'échantillons et de leurs propriétés mesurées et leurs spectres. En particulier, US2010/0211329 revendique l'utilisation combinée de modèles mathématiques grossiers avec des modèles mathématiques plus fins.

Il faut noter que l'analyse spectrale topologique en tant que telle n'a pas réellement évolué depuis le brevet EP0742900 de la Demanderesse. Ainsi, la présente invention consiste en une amélioration de la dite méthode d'analyse spectrale topologique. Les caractéristiques de cette nouvelle méthode d'analyse spectrale topologique ainsi que ses avantages seront décrits dans leurs détails dans la description qui va suivre ainsi que dans les exemples, figures et revendications. D'autres buts et avantages de la présente invention apparaîtront au cours de la description qui va suivre se rapportant à des modes de réalisation qui ne sont donnés qu'à titre d'exemples indicatifs et non limitatifs.

La compréhension de cette description sera facilitée en se référant aux figures 1 à 10 jointes en annexe et dans lesquelles :

- la figure 1 représente le spectre NIR d'un étalon,
- la figure 2 représente un exemple de banque de données spectrales A,
- la figure 3 représente un exemple de banque de données spectrales B (mise en évidence des longueurs d'onde polluantes),
- la figure 4 représente un exemple de banque de données spectrales améliorée A' (banque de données spectrales A dans laquelle on a supprimé les données spectrales correspondant aux longueurs d'onde polluantes),
- la figure 5 représente un exemple de banque de données spectrales élargie E (banque de données spectrales A ou A' dans laquelle on a ajouté des intergermes),
- la figure 6 représente un exemple de banque de données spectrales élargie EE (banque de données spectrales A et/ou E dans laquelle on a ajouté des extragermes).
- la figure 7 représente un exemple de banque de données spectrales élargie EEI (banque de données spectrales E et/ou EE dans laquelle on a ajouté des extragermes'),
- les figures 8 et 9 représentent respectivement un graphique et un tableau représentants des agrégats discriminants, et
- la figure 10 représente une banque de données spectrales du type de celle de la figure 5 dans laquelle ont été ajoutées les caractérisations mesurées des étalons et calculs des intergermes.

En particulier, toutes les approches chémométriques d'analyses spectrales de l'art antérieur requièrent l'établissement d'une banque de données spectrales constituée à partir d'un nombre initial très important d'échantillons et/ou étalons. Bien que l'art antérieur cite des constitutions de banque de données spectrales basées à partir d'au moins 60 ou au moins 100 échantillons et/ou étalons, tous les exemples décrivent des banques constituées d'un nombre d'échantillons nettement supérieurs. Ce nombre est encore plus grand dans les approches chémométriques utilisant les méthodes mathématiques régressives dont les banques de données sont constituées à partir de centaines voire milliers d'échantillons et/ou étalons. La présente invention permet de s'affranchir de cette exigence antérieure ce qui ouvre un nombre considérable de nouvelles applications comme démontré ci-après.

Ainsi, dans un premier temps, le procédé selon la présente invention consiste en la préparation d'une banque de données spectrales élargie E pour un nombre limité de matières d'étalons disponibles.

La présente invention peut avantageusement s'appliquer à tous les types de spectroscopie, par exemple, de manière non limitative, la spectroscopie Raman, la RMN, le domaine de l'infrarouge, de l'UV-visible ou du proche infrarouge (NIR). De préférence, la présente invention s'appliquera à la spectroscopie NIR. En effet, la spectroscopie NIR présente de nombreux avantages par rapport à d'autres procédés d'analyse, par exemple, dans les raffineries, les sites pétrochimiques ou chimiques ainsi que tous les domaines où la caractérisation de produits chimiques, par exemple les hydrocarbures, en particulier les carburants, et elle peut recouvrir un grand nombre d'applications répétitives avec précision, avec rapidité et en ligne. De plus, la région des NIR entre 800 et 2500 nm contient la totalité des informations moléculaires sous forme de combinaisons et d'harmoniques de vibrations polyatomiques.

Dans une première étape, on effectue un type sélectionné d'analyse spectrale sur chacun des étalons et on procède au peuplement de la banque de données spectrales A en y enregistrant les spectres (par exemple sous forme numérisée ou digitalisée), de préférence les spectres NIR, à plusieurs longueurs d'onde (ou nombres d'onde) pour un nombre limité de matières d'étalons disponibles.

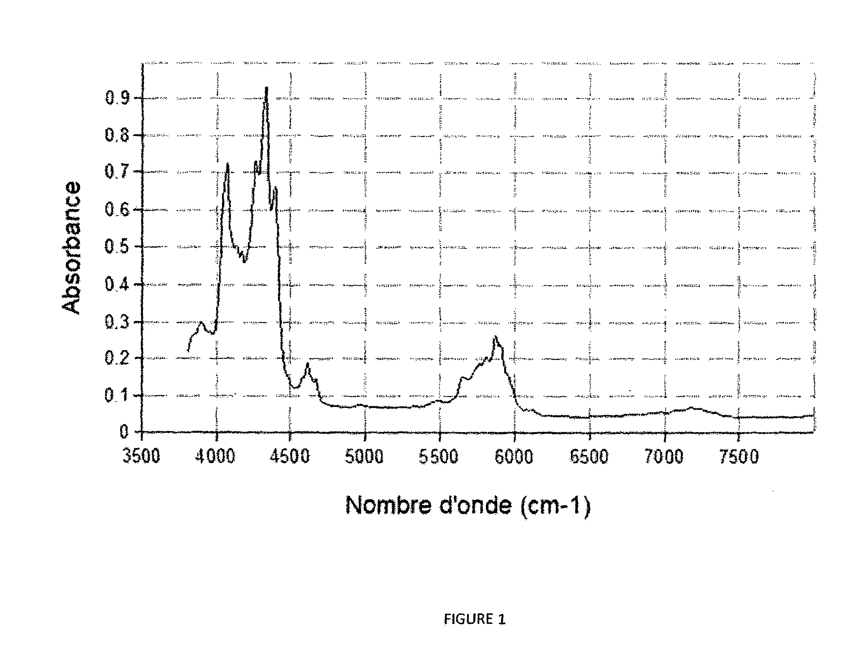

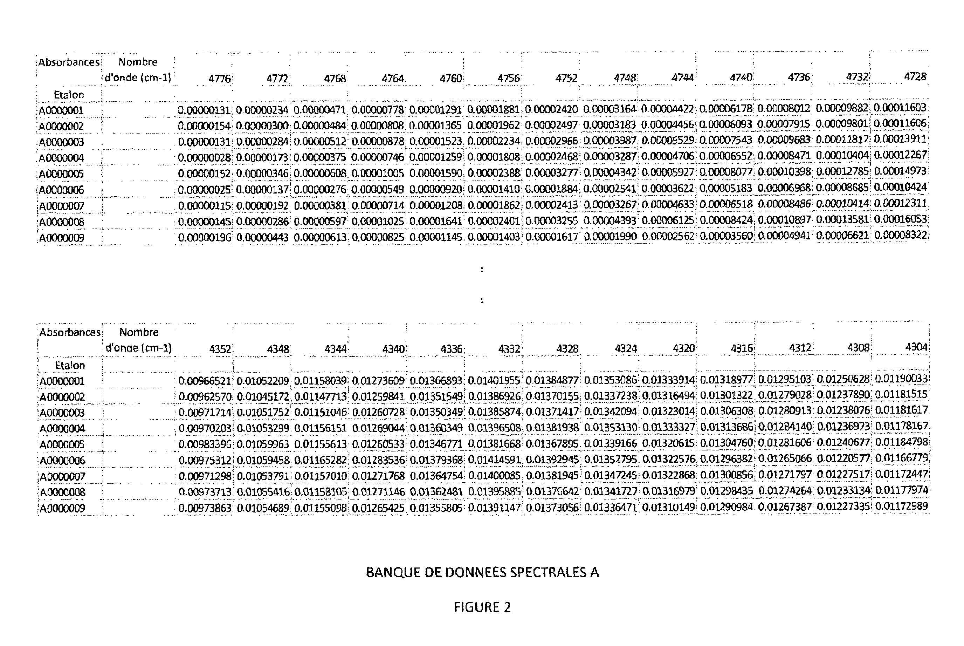

Un exemple de constitution et de représentation de cette banque de données spectrales initiale est décrit au moyen des figures 1 et 2.

La figure 1 représente le spectre NIR d'un étalon sur lequel on peut visualiser comme grandeur spectrale l'absorbance mesurée en fonction du nombre d'onde. Des spectres similaires sont donc également établis de manière identique pour chaque étalon. Dans le présent exemple de représentation, neuf étalons ont été analysés. A partir de ces spectres, on établit un tableau (la banque de données spectrales A) dont un exemple de représentation est donné dans la figure 2 pour un nombre limité de nombres d'onde.

Ainsi, dans le tableau de la figure 2 (qui correspond donc en une vue tronquée - on a représenté deux parties du tableau à des nombres d'onde sélectionnés différents), on peut apercevoir dans la colonne de gauche les références permettant d'identifier les neuf étalons et dans la première ligne la valeur des nombres d'onde ou gammes de nombres d'onde ; le contenu du tableau indique donc les valeurs des grandeurs spectrales (dans le cas présent, les absorbances) qui correspondent au couple « référence étalon / nombre d'onde ». Ces grandeurs spectrales peuvent être tous types de signaux caractérisant les spectres, par exemple les absorbances, transmittances, réllectances, etc... ; les absorbances ou densités optiques étant les signaux les plus communément utilisés. A titre d'exemple, on citera également comme signaux les dérivées des absorbances ou encore tout autre mesure résultant d'un autre type de traitement mathématique des dites absorbances.

Le nombre limité d'étalons disponibles est généralement dicté par le client et/ou l'utilisateur final, désireux d'utiliser des méthodes de contrôle réactives et fiables tout en limitant la nécessité de devoir disposer au préalable d'une grande quantité d'étalons et de devoir en effectuer une analyse selon des méthodes conventionnelles.

Une caractéristique du procédé selon la présente invention est qu'il permet donc de s'affranchir du besoin dicté par l'art antérieur de disposer d'un nombre très important d'étalons. Par exemple, la présente invention permet de caractériser un produit échantillon à partir d'un nombre d'étalons disponibles inférieur à 100, voire inférieur à 60 ou même inféricur à 50. Des résultats très probants ont même pu être obtenus au moyen de la présente invention à partir de moins de 40 étalons disponibles, voire moins de 30 ou même moins de 20. Un minimum de 10 étalons disponibles est toutefois préféré même si la présente invention a déjà été utilisée avec succès avec un minimum de 5 étalons disponibles.

Pour la présente invention, la description qui en est faite et les revendications ci-après, il est évident pour l'homme du métier que les spectres peuvent être réalisés en fonction des longueurs d'onde (et/ou gammes de longueurs d'onde) et/ou en fonction des nombres d'onde (et/ou gammes de nombres d'onde), car le nombre d'onde est représenté par l'inverse de la longueur d'onde.

Pour la présente invention, la description qui en est faite et les revendications ci-après, les étalons seront aussi bien qualifiés de « germes » [« G »], les deux termes étant interchangeables.

Une seconde étape optionnelle et préférée selon la présente invention consiste ensuite en l'élimination des longueurs d'onde et/ou gammes de longueurs d'onde « polluantes » de la banque de données spectrales A. Cette étape consiste

1. à répéter au moins deux fois, de préférence au moins trois fois, plus préférentiellement au moins cinq fois la même analyse spectrale que celle effectuée lors de la première étape, et ceci sur au moins un des étalons disponibles, de préférence sur au moins deux ou même sur la totalité des dits étalons ;

2. à construire une banque de données spectrales B à partir des mesures effectuées au point 1 ci-dessus ;

3. à calculer pour chaque étalon sélectionné au point 1 ci-dessus et pour chaque longueur d'onde et/ou gamme de longueur d'onde (de la banque de données spectrales A) les écarts-type ($\sigma$) des mesures enregistrées dans la banque de données B;

4. à identifier dans la banque de données B les longueurs d'onde et/ou gamme de longueur d'onde pour lesquelles l'écart-type est supérieur à une valeur prédéterminée ;

5. à supprimer de la banque de données spectrales A les mesures correspondant aux longueurs d'onde identifiées au point 4 ci-dessus.

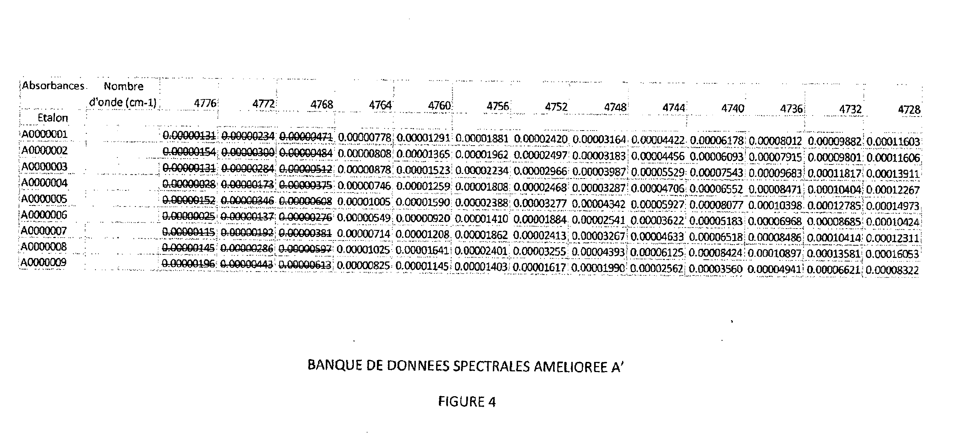

Ainsi, selon un mode d'exécution préféré de la présente invention, l'utilisation de la seconde étape ci-dessus permet l'obtention d'une banque de données spectrales améliorée A' ; un exemple de banque de données spectrales améliorée A' est représentée dans la figure 4.

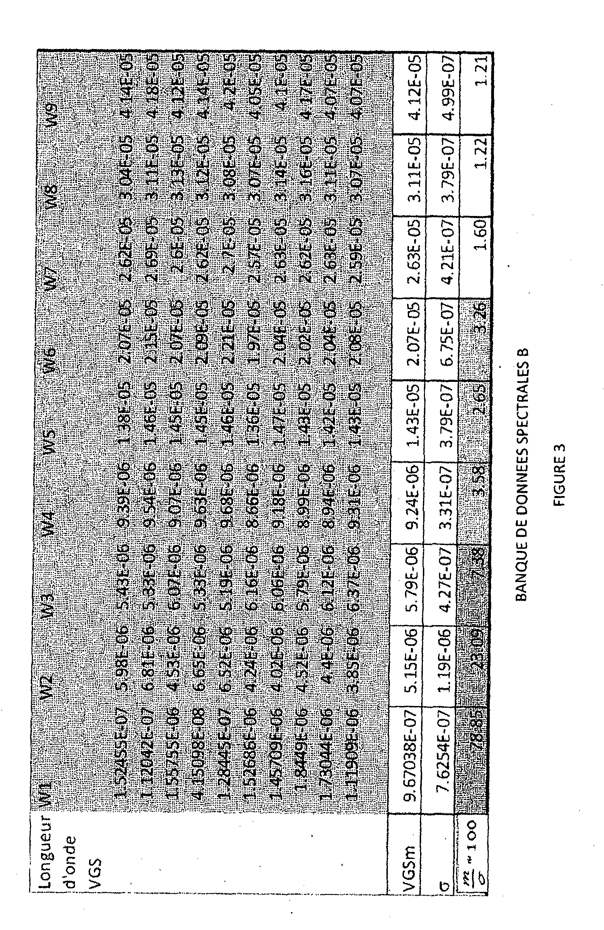

Un exemple de représentation de la banque de données spectrales B est illustré dans la figure 3 par un tableau.

On peut y voir que la même analyse spectrale a été répétée dix (10) fois sur le même échantillon et que les valeurs de grandeurs spectrales correspondantes ont été enregistrées dans le tableau. Les trois dernières lignes du tableau correspondent respectivement et successivement à

- la valeur de grandeur spectrale moyenne VGSmoyenne (« VGSm ») qui correspond à la somme des valeurs de grandeur spectrale divisée par le nombre (« n ») d'analyses effectuées (VGSm = [Σ VGS]/n), avec n=10 dans la présente représentation ;
- l'écart-type (« σ ») qui correspond à la différence entre VGSmax et VGSmin dans chaque colonne du tableau ;
- le ratio (σ/(VGSm/100)) dont la valeur (en pourcentage) est calculée en divisant l'écart-type par la valeur de la grandeur spectrale moyenne, le résultat étant multiplié par cent.

Ainsi, la dernière ligne du tableau permet d'identifier dans la banque de données B les longueurs d'onde et/ou gammes de longueurs d'onde pour lesquelles le ratio (σ/(VGSm/100)) est supérieur à une valeur prédéterminée. Selon un mode d'exécution de la présente invention, on identifie dans le tableau B les colonnes (les longueurs d'onde et/ou gammes de longueurs d'onde) pour lesquelles la valeur des ratios (σ/(VGSm/100)) est supérieure à 2% (de préférence supérieure à 1,5% ou même 1%) ; ensuite, on élimine de la banque de données A les dites colonnes, à savoir les valeurs de grandeurs spectrales correspondantes aux longueurs d'onde « polluantes ». Les colonnes correspondantes (c'est-à-dire celles dont la longueur d'onde et/ou gamme de longueurs d'onde sont identiques) seront ensuite éliminées de la base de données spectrales A. Il faut noter que dans les exemples ci-dessus, les tableaux A et B constituent des représentations qui n'ont pas de véritables relations entre elles ; il faut également noter que les tableaux A et B ont été tronqués de manière à en donner une représentation visuelle ; en réalité, les dits tableaux comprennent une multitude de colonnes représentant les longueurs d'onde et/ou gammes de longueurs d'onde extraites du spectre correspondant comme détaillé plus avant dans la description.

Un exemple de représentation de la banque de données spectrales améliorée A' est donc illustré dans la figure 4.

Une caractéristique essentielle du procédé selon la présente invention consiste en ce que l'établissement de la banque de données spectrales améliorée A' n'a pas nécessité à ce stade de faire référence et/ou la moindre corrélation avec les propriétés chimiques et/ou physico-chimiques des étalons. En effet, cette deuxième étape en est totalement indépendante.

Une troisième étape consécutive du procédé selon la présente invention consiste en l'élargissement proprement dit de la banque de données spectrales A (ou de la banque de données spectrales améliorée A'). Cette étape consiste à générer des étalons synthétiques (également appelés « intergermes » [« IG »]) à partir des étalons disponibles et de leurs valeurs de grandeurs spectrales. Par exemple, pour générer ces IG on peut effectuer des combinaisons de plusieurs étalons disponibles de la première étape ci-dessus et peupler la banque de données spectrales A (ou la banque de données spectrales améliorée A') au moyen des dites combinaisons. Ces combinaisons peuvent se faire de manière aléatoire ou de manière orientée tel que décrit plus avant dans le texte. Les dites combinaisons peuvent consister en toute sorte de traitement mathématique appliqué aux valeurs de grandeurs spectrales des étalons G. Selon un mode d'exécution préféré de la présente invention la dite combinaison consiste en un barycentre des valeurs de grandeurs spectrales (« VGS ») d'au moins deux étalons. On pourra par exemple effectuer ces combinaisons entre deux, trois ou un nombre supérieur des étalons disponibles de départ, de préférence entre tous les étalons disponibles de départ.

Un exemple de formule correspondante pour la génération d'un étalon synthétique (IG) à partir des étalons G (auquel correspondent les VGS) est

$$[\Sigma\, Ri \times VGSi] / [\Sigma\, Ri]$$

pour i étant un nombre entier allant de 1 au nombre d'étalons G choisis pour cette combinaison et R étant un nombre réel tel que

$$[\Sigma\, Ri] > 0,$$

et

$$|[\Sigma\, R*i]| \,/\, [\Sigma\, Ri] \;\; < \;\; 0.3 \;\;,\; \text{de préférence} < 0.15,$$

Et avec R* représentant uniquement les nombres réels négatifs.

Cette dernière formule peut aussi s'énoncer comme étant la valeur absolue de la somme des réels négatifs divisée par la somme de tous les réels.

Selon un mode d'exécution préféré de la présente invention, au moins un des Ri est un réel négatif (R*).

En procédant de la sorte, cela permet donc d'élargir au moyen d'étalons synthétiques (également appelés « intergermes » ou « IG ») la banque de données spectrales A (ou la banque de données spectrales améliorée A') et donc d'obtenir une banque de données spectrales élargie E.

Selon un mode d'exécution préféré de la présente invention, lorsque le nombre d'étalons de la banque de données spectrales A (ou A') vaut « N », le nombre d'intergermes IG est au moins supérieur à 1,5 N, de préférence supérieur à 2 N, plus préférentiellement supérieur à 5 N, voire supérieur à 10 N.

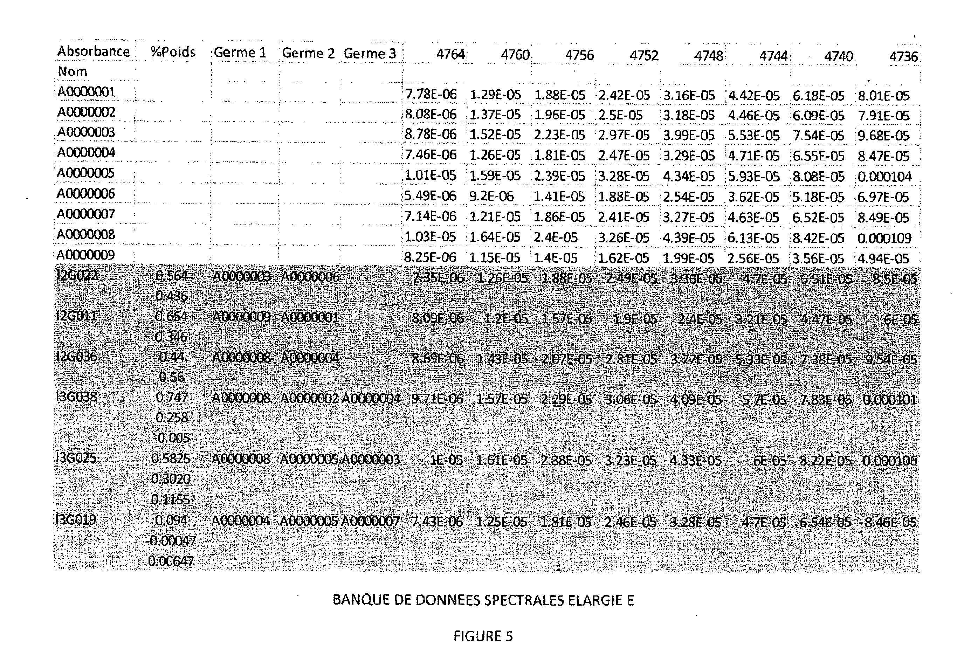

Un exemple de représentation de la banque de données spectrales élargie E est illustré dans la figure 5 par un tableau. On peut y voir que des étalons synthétiques (ou intergermes « IG ») ont été générés par combinaisons mathématiques et que les valeurs de grandeurs spectrales correspondantes ont été enregistrées dans le tableau E. On peut observer à titre d'exemple dans le tableau E (Figure 5):

- six intergermes « IG » (I2G022, 12G011, I2G036, I3G038, I3G025 et I3G019;
- dans les colonnes 3 à 5, les germes utilisés pour générer chacun des dits intergermes ;
- dans la colonne 2, la pondération appliquée aux germes sélectionnés pour le calcul des VGS des intergermes (par exemple, pour le calcul de l'intergerme I2G036, on a appliqué une pondération de (0,44 fois le germe A0000008 + 0,56 fois le germe A0000004)).

Une caractéristique essentielle du procédé selon la présente invention consiste en ce que l'établissement de la banque de données spectrales élargie E n'a pas nécessité à ce stade de faire référence et/ou la moindre corrélation avec les propriétés chimiques et/ou physico-chimiques des étalons. En effet, cette étape d'élargissement en est totalement indépendante.

Une quatrième étape additionnelle optionnelle et préférée selon la présente invention consiste ensuite en un élargissement supplémentaire de la banque de données spectrales A ou de la banque de données spectrales élargie E au moyen d'un autre type d'étalons synthétiques que nous appellerons « extragermes » (« EG »). Cette étape est particulièrement pertinente lorsque le produit cible à analyser contient une pluralité de composés chimiques.

Elle consiste dans une première séquence à enregistrer les données spectrales d'au moins un spectre correspondant à un (ou plusieurs) des composés chimiques du produit cible (aussi appelé « Pôle(s) »). Ensuite, dans une seconde séquence, on procède à un élargissement additionnel de la banque de données spectrales en utilisant lc(s) dit Pôle(s) et en les combinant avec les germes « G » (on effectue donc une combinaison de leurs valeurs de grandeur spectrale VGS).

Cette seconde séquence consiste à générer des étalons synthétiques (également appelés « extragermes » [« EG »]) à partir du/des Pôle(s) et des étalons disponibles et de leurs valeurs de grandeurs spectrales. Par exemple, pour générer ces EG on peut effectuer des combinaisons de(s) Pôle(s) et de plusieurs étalons disponibles de la première étape ci-dessus et peupler la banque de données spectrales A et/ou E au moyen des dites combinaisons. Ces combinaisons peuvent se faire de manière aléatoire ou de manière orientée tel que décrit plus avant dans le texte. Les dites combinaisons peuvent consister en toute sorte de traitement mathématique appliqué aux valeurs de grandeurs spectrales des étalons G et du/des Pôle(s). Selon un mode d'exécution préféré de la présente invention la dite combinaison consiste en un barycentre des valeurs de grandeurs spectrales (« VGS ») des étalons G sélectionnés et du/des Pôle(s). On pourra par exemple effectuer ces combinaisons entre au moins un Pôle et un, deux, trois ou un nombre supérieur des étalons disponibles de départ, de préférence avec tous les étalons disponibles de départ. Ces combinaisons s'effectueront de préférence avec tous les Pôles disponibles, de préférence avec tous les Pôles correspondant à tous les composés chimiques constituant le produit cible.

Un exemple de formule correspondante pour la génération d'un étalon synthétique de type EG à partir de Pôle(s) et d'étalons G (auxquels correspondent les VGS) est

$$[\Sigma\, Ri \times VGSi + \Sigma\, Rj \times VGSj] \,/\, [\Sigma\, Ri + \Sigma\, Rj]$$

pour i étant un nombre entier allant de 1 au nombre d'étalons G choisis pour cette combinaison, j étant un nombre entier allant de 1 au nombre de Pôle(s) choisis pour cette combinaison
et R étant un nombre réel tel que

$$[\Sigma\, Ri + \Sigma\, Rj] > 0,$$

et

$$|[\Sigma\, R^*i]| / [\Sigma\, Ri + \Sigma\, Rj] < 0.3 \text{ , de préférence} < 0.15, \qquad (I)$$

avec R* représentant uniquement les nombres réels négatifs,
et, de préférence, chaque Rj doit être tel que le rapport
Rj / [$\Sigma$ Ri + $\Sigma$ Rj] soit toujours compris entre l'opposé de la teneur minimale et la teneur maximale en pourcentage en poids du Pôles j dans le produit cible.

La formule (I) ci-dessus peut aussi s'énoncer comme étant la valeur absolue de la somme des réels négatifs « i » divisée par la somme de tous les réels. Selon un mode d'exécution préféré de la présente invention, au moins un des Ri est un réel négatif (R*).

En procédant de la sorte, cela permet donc d'élargir au moyen d'étalons synthétiques « EG » (« extragermes ») la banque de données spectrales A et/ou E et donc d'obtenir une banque de données spectrales élargie EE. De manière optionnelle, les dits Pôles et leurs VGS peuvent aussi être intégrés dans la banque de données spectrales EE mais ceci ne constitue pas un mode d'exécution préféré selon la présente invention.

Selon un mode d'exécution préféré de la présente invention, lorsque le nombre d'étalons de la banque de données spectrales A (ou A') vaut « N » et le nombre de « Pôles » vaut « M » , le nombre d'extragermes « EG » est au moins supérieur à NxM, de préférence supérieur à 1,5 NxM, de préférence supérieur à 2 NxM.

Selon un mode d'exécution de la présente invention, le nombre de pôles est inférieur à 15, par exemple inférieur à 10.

Selon un mode d'exécution de la présente invention, le nombre de pôles est inférieur à 0,2 fois le nombre d'étalons, par exemple inférieur à 0,1 fois le nombre d'étalons.

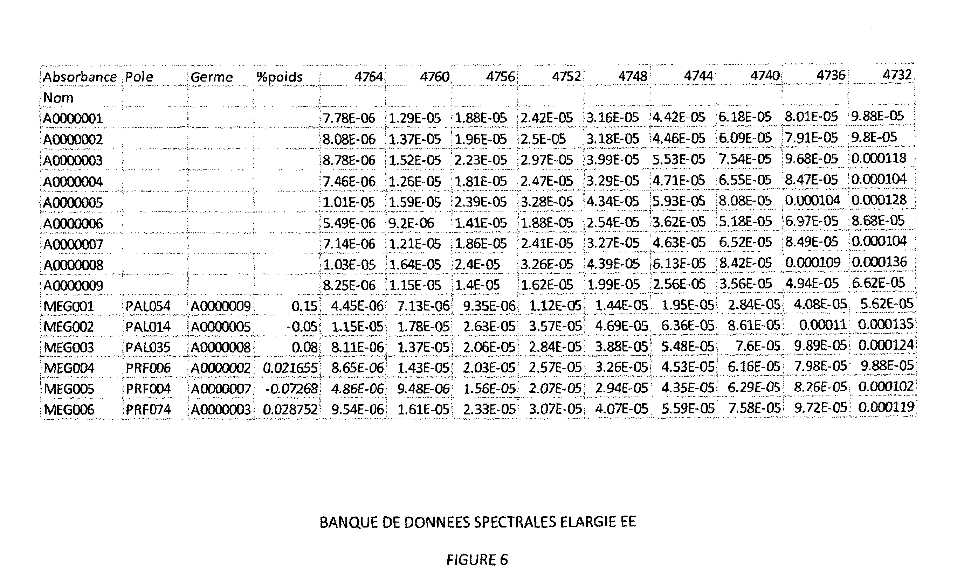

Un exemple de représentation de la banque de données spectrales élargie EE est illustré dans la figure 6 par le tableau EE. On peut y voir que les « Pôles » ainsi que la génération des étalons synthétiques « EG » (extragermes) par combinaisons mathématiques et les valeurs de grandeurs spectrales correspondantes ont été enregistrées dans le tableau. On peut observer à titre d'exemple dans le tableau EE (Figure 6) :

- six extragermes « EG » (MEG001 à MEG006);
- dans la colonne 2 (« Pôle »), la référence des pôles utilisés (par exemple, le Pôle PAL054 est un type particulier d'alkylat utilisé dans la composition d'essences constituant les étalons de la banque de données) ;
- dans la colonne 3, la référence du germe utilisé pour générer chacun des dits extragermes ;
- dans la colonne 4, la pondération appliquée aux Pôles (X)- la pondération appliquée aux germes étant donc de (1-X). Par exemple, pour le calcul de l'extragerme MEG001, on a appliqué une pondération de (0,15 fois le Pôle PAL054 + 0,85 fois le germe A0000009).

Une caractéristique essentielle du procédé selon la présente invention consiste en ce que l'établissement de la banque de données spectrales élargie EE n'a pas nécessité à ce stade de faire référence et/ou la moindre corrélation avec les propriétés chimiques et/ou physico-chimiques des étalons. En effet, cette étape d'élargissement en est totalement indépendante.

Une cinquième étape additionnelle optionnelle et préférée selon la présente invention consiste également en un élargissement supplémentaire de la banque de données spectrales élargie E et/ou EE au moyen d'un autre type d'étalons synthétiques que nous appellerons

« extragermes' » (« EG' »). Cette étape est à nouveau particulièrement pertinente lorsque le produit cible à analyser contient une pluralité de composés chimiques.

Elle consiste dans une première séquence à enregistrer les données spectrales d'au moins un spectre correspondant à un (ou plusieurs) des composés chimiques du produit cible (aussi appelé « Pôle(s) »).

Ensuite, dans une seconde séquence, on procède à un élargissement additionnel de la banque de données spectrales E ou EE en utilisant le(s) dit(s) Pôle(s) et en les combinant avec les intergermes « IG » (combinaison de leurs VGS).

Cette seconde séquence consiste à générer des étalons synthétiques (également appelés « extragermes' » [« EG' »]) à partir du/des Pôle(s) et des étalons « intergermes » « IG » (et optionnellement des gennes « G ») et de leurs valeurs de grandeurs spectrales. Par exemple, pour générer ces EG' on peut effectuer des combinaisons de(s) Pôle(s) et de plusieurs intergermes « IG » de la troisième étape ci-dessus (et optionnellement de germes « G » de la première étape) et peupler la banque de données spectrales E et/ou EE au moyen des dites combinaisons.

Ces combinaisons peuvent se faire de manière aléatoire ou de manière orientée tel que décrit plus avant dans le texte. Les dites combinaisons peuvent consister en toute sorte de traitement mathématique appliqué aux valeurs de grandeurs spectrales des étalons synthétiques (intergermes) « IG » et du/des Pôle(s)(et optionnellement des germes « G »).

Selon un mode d'exécution préféré de la présente invention la dite combinaison consiste en un barycentre des valeurs de grandeurs spectrales (« VGS ») des intergermes IG et du/des Pôle(s) )(et optionnellement des germes « G »). On pourra par exemple effectuer ces combinaisons entre au moins un Pôle et un, deux, trois ou un nombre supérieur des « IG » de la troisième étape, de préférence avec tous les « IG » ; et optionnellement avec au moins un des germes « G », de préférence avec tous les germes « G ». Ces combinaisons s'effectueront de préférence avec tous les Pôles disponibles, de préférence avec tous les Pôles correspondant à tous les composés chimiques constituant le produit cible.

Un exemple de formule correspondante pour la génération d'un étalon synthétique de type EG' à partir de Pôle(s) et d'étalons synthétiques IG (auxquels correspondent les VGS) est

$[\Sigma\ Ri \times VGSi + \Sigma\ Rj \times VGSj + \Sigma\ Rk \times VGSk] / [\Sigma\ Ri + \Sigma\ Rj + \Sigma\ Rk]$ pour k étant un nombre entier allant de 1 au nombre d'étalons synthétiques IG choisis pour cette combinaison, i étant un nombre entier allant de 0 (de préférence 1) au nombre d'étalons G choisis pour cette combinaison, j étant un nombre entier allant de 1 au nombre de Pôle(s) choisis pour cette combinaison et R étant un nombre réel tel que

$$[\Sigma\ Ri + \Sigma\ Rj + \Sigma\ Rk] > 0,$$

et

$$\left|[\Sigma\ R^*i] + [\Sigma\ R^*k]\right| / [\Sigma\ Ri + \Sigma\ Rj + \Sigma\ Rk] \quad < \quad 0.3 \text{ , de préférence} < 0.15, \qquad (II)$$

avec Rk étant de préférence toujours positif,
avec R* représentant uniquement les nombres réels négatifs,
ET de préférence chaque Rj doit être tel que le rapport
Rj / $[\Sigma\ Ri + \Sigma\ Rj + \Sigma\ Rk]$ soit toujours compris entre l'opposé de la teneur minimale et la teneur maximale en pourcentage en poids du Pôles j dans le produit cible.

La formule (II) ci-dessus peut aussi s'énoncer comme étant la valeur absolue de la somme des réels négatifs « i » divisée par la somme de tous les réels. Selon un mode d'exécution préféré de la présente invention, au moins un des Ri est un réel négatif (R*).

En procédant de la sorte, cela permet donc d'élargir au moyen de d'étalons synthétiques « EG' » ( « extragermes' » ) la banque de données spectrales E et/ou EE et donc d'obtenir une banque de données spectrales élargie EEI. De manière optionnelle, les dits Pôles et leurs VGS peuvent aussi être intégrés dans la banque de données spectrales E mais ceci ne constitue pas un mode d'exécution préféré selon la présente invention.

Selon un mode d'exécution préféré de la présente invention, lorsque le nombre d'étalons synthétiques IG de la banque de données spectrales E vaut « Z » et le nombre de « Pôles » vaut « M » , le nombre d'extragermes' « EG' » est au moins supérieur à ZxM , de préférence supérieur à 1,5 ZxM, de préférence supérieur à 2 ZxM. Selon un autre mode d'exécution préféré de la présente invention, lorsque le nombre d'étalons synthétiques IG de la banque de données spectrales E vaut « Z », le nombre de germes G vaut N et le nombre de « Pôles » vaut « M » , le nombre d'extragermes' « EG' » est au moins supérieur à ZxMxN, de préférence supérieur à 1,5 ZxMxN, de préférence supérieur à 2 ZxMxN.

Selon un mode d'exécution de la présente invention, le nombre de pôles est inférieur à 15, par exemple inférieur à 10.

Selon un mode d'exécution de la présente invention, le nombre de pôles est inférieur à 0,2 fois le nombre d'étalons, par exemple inféricur à 0,1 fois le nombre d'étalons.

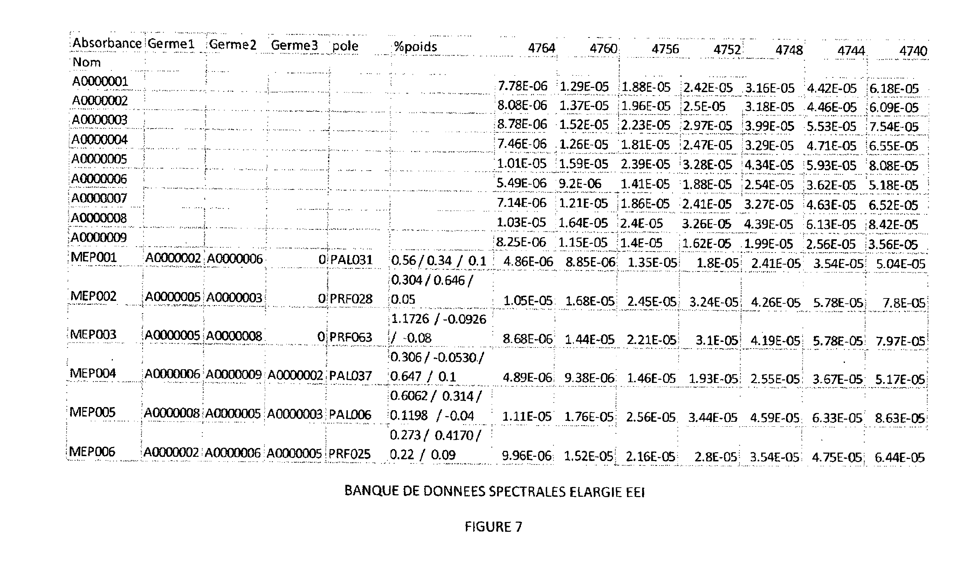

Un exemple de représentation de la banque de données spectrales élargie EEI est illustré dans la figure 7 par un tableau. On peut y, voir les « Pôles » ainsi que la génération des étalons synthétiques « EG' » (extragermes') par combinaisons mathématiques et que les valeurs de grandeurs spectrales correspondantes ont été enregistrées dans le tableau. On peut observer à titre d'exemple dans le tableau EEI (Figure 7) :

- six extragermes' « EG' » (MEP001 à MEP006);
- dans la colonne 5 (« Pôlc »), la référence des pôles utilisés (par exemple, le Pôle PAL037 est un type particulier d'alkylat utilisé dans la composition d'essences constituant les étalons de la banque de données) ;
- dans les colonnes 2 à 4, la référence des intergermes (combinaisons de germes) utilisé pour générer chacun des dits extragermes ;
- dans la colonne 6, la pondération appliquée. Par exemple, pour le calcul de l'extragerme MEP004, on a appliqué une pondération de

[ 0,9 fois un intergerme (correspondant à 0,306 fois le germe A00000061 - 0,0530 fois le germe A0000009 + 0,647 fois le germe A0000002) + 0,1 fois le pôle PAL037 ].

Une caractéristique essentielle du procédé selon la présente invention consiste en ce que l'établissement de la banque de données spectrales élargie EEI n'a pas nécessité à ce stade de faire référence et/ou la moindre corrélation avec les propriétés chimiques et/ou physico-chimiques des étalons. En effet, cette étape d'élargissement en est totalement indépendante.

La présente invention concerne donc une méthode de génération et d'optimisation d'une banque de données spectrales pouvant servir dans un procédé de caractérisation d'un produit cible par analyse spectrale topologique à partir d'un nombre limité d'étalons disponibles,
méthode consistant dans une première étape

- à effectuer la même analyse spectrale sur les dits étalons, et
- à constituer à partir des spectres obtenus une banque de données spectrales A à plusieurs longueurs d'onde et/ou gammes de longueurs d'onde,

caractérisée dans une seconde étape optionnelle en ce qu'on élimine de la banque de données spectrales A les longueurs d'onde et/ou gammes de longueurs d'onde « polluantes » de la dite banque de données spectrales A, seconde étape consistant

1. à répéter au moins deux fois, de préférence au moins trois fois, plus préférentiellement au moins cinq fois la même analyse spectrale que celle effectuée lors de la première étape, et ceci sur au moins un des étalons disponibles, de préférence sur au moins deux ou même sur la totalité des dits étalons disponibles ;
2. à construire une banque de données spectrales B à partir des mesures effectuées au point 1 ci-dessus ;
3. à calculer pour chaque étalon sélectionné au point 1 ci-dessus et pour chaque longueur d'onde et/ou gamme de longueur d'onde (de la banque de données spectrales A) les écarts-type ($\sigma$) des mesures enregistrées dans la banque de données B ;
4. à identifier dans la banque de données B les longueurs d'onde et/ou gamme de longueur d'onde pour lesquelles l'écart-type est supérieur à une valeur prédéterminée ; et
5. à supprimer de la banque de données spectrales A les mesures correspondant aux longueurs d'onde identifiées au point 4 ci-dessus et obtenir ainsi une banque de données spectrales améliorée A',

et également caractérisée par une troisième étape consécutive qui consiste en l'élargissement de la banque de données spectrales A (ou de la banque de données spectrales améliorée A'), étape consistant à effectuer des combinaisons de plusieurs étalons de la première étape et à peupler la banque de données spectrales A (ou la banque de données spectrales améliorée A') au moyen des dites combinaisons (appelées étalons synthétiques ou intergermes « IG ») et obtenir ainsi une banque de données spectrales élargie E,

et également caractérisée par une quatrième étape consécutive optionnelle qui consiste en l'élargissement de la banque de données spectrales E, étape consistant dans une première séquence à rajouter à la banque de données spectrales élargie E au moins un spectre correspondant à au moins un des composés chimiques (ou plusieurs) du produit cible (aussi appelé « Pôle(s) ») et dans une seconde séquence à effectuer des combinaisons mathématiques du(des) dit(s) Pôle(s) avec au moins un étalon G de la première étape et/ou au moins un des étalons IG de la troisième étape et à peupler la banque de données spectrales E au moyen des dites combinaisons (appelées respectivement soit étalons synthétiques extragermes « EG », soit étalons synthétiques extragermes' « EG' » ) et obtenir ainsi une banque de données spectrales élargie EE (ou EEI).

Après avoir constitué la banque de données spectrales élargie conformément à la méthodologie développée ci-dessus, il est possible d'utiliser toute sorte d'analyse mathématique conventionnelle pour caractériser un échantillon à partir de la banque de données spectrales élargie.

Selon un mode d'exécution préféré de la présente invention, avant cette caractérisation, une étape intermédiaire additionnelle consiste ensuite à définir une méthode de discrimination efficace permettant de mettre en évidence des sous-groupes homogènes de produits qui obéissent préférentiellement aux mêmes types de liaisons propriétés-spectres par suite d'une forte analogie de structure moléculaire.

Les méthodes de discrimination peuvent être exclusivement basées sur des techniques d'analyse mathématiques (par exemple, des analyses factorielles et/ou des analyses en composantes principales). Bien que certaines de ces méthodes mathématiques puissent s'avérer utiles, la présente invention utilise de préférence encore au moins une étape empirique pour effectuer ce type de discrimination, étape empirique basée sur une analyse visuelle des spectres des étalons et/ou des pôles susmentionnés ; bien que ceci ne constitue pas un mode d'exécution préféré selon la présente invention, cette analyse visuelle pourrait également se faire sur les spectres reconstitués (à partir de leurs VGS calculées) des intergermes et/ou extragermes. Cette étape empirique permet ainsi de mettre en évidence des différences infimes entre les spectres en question, différences qui après vérification peuvent s'avérer synonymes de l'existence de sous-groupes homogènes de produits même si on pouvait penser à l'origine que l'ensemble de la population des produits était homogène. Cette technique de discrimination permet ainsi de mettre en évidence des différences entre les produits alors même que l'utilisateur final n'en avait pas encore la connaissance.

Pour rappel, une caractéristique essentielle du procédé d'établissement de la banque de données spectrales élargie selon l'invention susmentionnée est qu'il n'a pas été nécessaire de faire référence et/ou la moindre corrélation avec les propriétés chimiques et/ou physico-chimiques des étalons. Selon un mode d'exécution préféré de la présente invention, il en est exactement de même pour l'étape de discrimination décrite ici.

Ainsi, selon un mode d'exécution de la présente invention, l'étape de discrimination consiste ensuite à définir, à partir de la banque de données spectrales élargie, des agrégats (de préférence au moins deux agrégats), des espaces à n dimensions représentant les combinaisons des dits agrégats (de préférence des plans - ou espaces à deux dimensions - représentant des couples d'agrégats), et des boites spectrales correspondantes.

Selon un mode d'exécution de la présente invention, la méthode de discrimination comprend également au moins deux caractéristiques préférées particulières :

> 1. le fait que la dite méthode implique une phase d'itération lors de laquelle on vérifie l'efficacité de la boite spectrale et donc la pertinence des agrégats sélectionnés ; et
> 2. le fait que les agrégats sont bâtis à partir d'au moins une analyse visuelle de l'allure des spectres qui permet ensuite de bâtir les équations des agrégats en fonction des valeurs de grandeurs spectrales VGS.

Les agrégats sont donc définis comme des fonctions mathématiques des valeurs de grandeurs spectrales de la banque de données spectrales élargie permettant de regrouper et/ou discriminer et/ou séparer des familles de produits au sein de la banque de données spectrales élargie.

Ces agrégats peuvent donc être représentés de manière générique par la fonction Agg = f (VGSi).

Selon un mode d'exécution préféré de la présente invention, la dite fonction répond aux équations

de type $\dfrac{\sum_{k=1}^{n}\sum_{i=1}^{p} ai\, Wi^{\propto} Wk^{\beta}}{\sum_{i=1}^{q} ai\, Wi^{\propto}}$

ou de préférence de type $\dfrac{\sum_{i=1}^{p} ai\, Wi^{\propto}}{\sum_{i=1}^{q} ai\, Wi^{\propto}}$

dans lesquelles

- W représentent les valeurs de grandeurs spectrales VGS discriminantes,
- a sont des réels positifs,
- p et q représentent la sélection des VGS aux longueurs d'ondes et/ou gammes de longueurs d'onde pertinentes pour l'étape de discrimination, et
- $\propto$ et $\beta$ sont des exposants compris entre 1/3 et 3.

En ce qui concerne la phase d'itération lors de laquelle on vérifie l'efficacité de la boite spectrale et donc la pertinence des agrégats sélectionnés, il suffit de rajouter à la banque de données spectrales préétablie des colonnes représentant les équations des agrégats discriminants, de calculer la valeur des dits agrégats pour chacun des étalons et/ou intergermes et/ou extragermes et/ou pôles de la banque de données spectrales, d'en faire les représentations graphiques (de préférence dans des espaces à deux dimensions par paire d'agrégats), et de visualiser ainsi si la discrimination a bien conduit à la mise en évidence de sous-groupes homogènes de produits. Cette étape de discrimination permet donc de diviser la banque de données spectrales en plusieurs (au moins deux) familles distinctes (sous-groupes homogènes de produits), de préférence au moins trois familles distinctes.

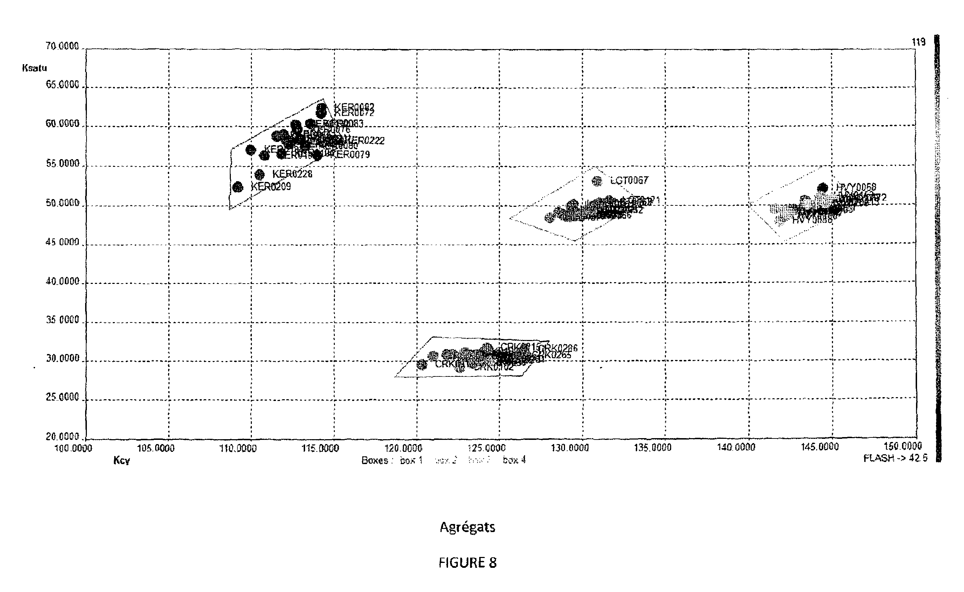

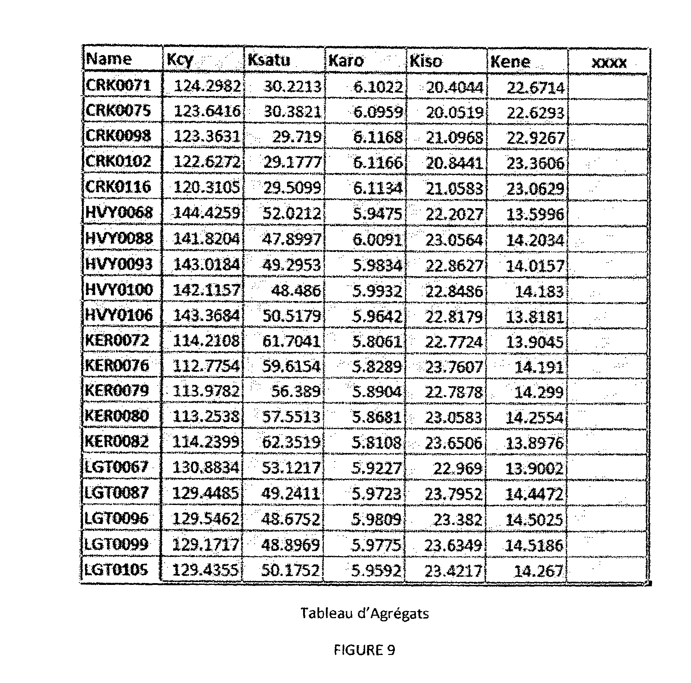

A titre d'exemple, les figures 8 et 9 représentent respectivement

- un graphique dont les axes abscisses/ordonnées correspondent à deux agrégats discriminants, et

- un tableau de valeurs correspondantes dont les colonnes représentent plusieurs agrégats discriminants dont les deux premiers ont servi à la constitution du graphique (figure 8).

Ces figures expliquent clairement comment on parvient à mettre en évidence plusieurs sous-groupes homogènes de produits.

La présente invention concerne donc également un procédé de caractérisation d'un produit par analyse spectrale topologique.

La caractérisation d'un produit selon la présente invention peut consister en une détermination et/ou une prédiction de toute caractéristique chimique, physique ou physico-chimique du dit produit.

Selon un mode d'exécution de la présente invention, la première étape a donc été caractérisée par l'établissement d'une banque de données spectrales, de préférence une banque de données spectrales élargies comme décrite dans la présente description.

Comme déjà indiqué ci-dessus, les représentations graphiques des banques de données (tableaux) dans les figures annexées constituent des vues tronquées car en réalité les dites banques de données comprennent une multitude de colonnes représentant les longueurs d'onde et/ou gammes de longueurs d'onde (ou à titre équivalent, les nombres d'onde ou gamme de nombres d'onde) extraites des spectres correspondants. Selon un mode d'exécution de la présente invention, le nombre de longueurs d'onde choisi peut être de 2 à 1000, par exemple de 5 à 200 ou de 40 à 80.

Les longueurs d'onde choisies peuvent être à des intervalles réguliers tels que 1 à 50 nm ou tous les 10 à 50 nm ou tous les 15 à 35 nm ou tous les 1 à 5 nm ou tous les nanomètres ; ou elles peuvent être à des intervalles irréguliers, par exemple à des intervalles de 1 à 200 nm, par exemple de 1 à 100 ou de 1 à 50 en particulier de 2 à 50 ou de 4 à 50 ou de 10 à 60 nm, qui peuvent être choisis ou aléatoires en raison d'une variation de la forme de la courbe spectrale à cette longueur d'onde par exemple, un pic, une vallée ou un épaulement ou bien choisis avec des critères chimiques ou statistiques tels que l'analyse factorielle. Les longueurs d'onde peuvent être dans la région des 600 à 20000 nm, par exemple de 625 à 2600 nm, par exemple de 800 à 2600 nm, en particulier de 1500 à 2600 ou de 2000 à 2550 nm. Les nombres d'ondes peuvent être dans la région des 16600 à 500, par exemple de 16000 à 3840 cm-1, par exemple de 12500 à 3840 cm-1 en particulier de 6660 à 3840 ou de 5000 à 3900 cm-1; les fréquences correspondantes en Hertz peuvent être obtenues en multipliant ces longueurs d'onde par 3x 10(exp)10 cm/s.

Avant de pouvoir déterminer et/ou prédire une propriété d'un échantillon, il faut bien évidemment mesurer les valeurs de la dite propriété pour les étalons et, optionnellement, pour les pôles. Ainsi, selon un mode d'exécution de la présente invention, les propriétés chimiques, physiques et/ou physico-chimiques des étalons (et optionnellement des pôles) sont déterminées au moyen de techniques d'analyses conventionnelles. A titre d'exemple non limitatif des techniques d'analyse conventionnelle, on citera la chromatographie en phase gazeuse pour les compositions chimiques. Bien qu'il aille de soi que les étalons soient choisis pour couvrir la gamme dans laquelle on doit utiliser la méthode, la présente invention permet dans un mode d'exécution préféré de travailler avec un nombre limité d'étalons grâce à la méthodologie d'élargissement de la banque de données spectrales susmentionnée.

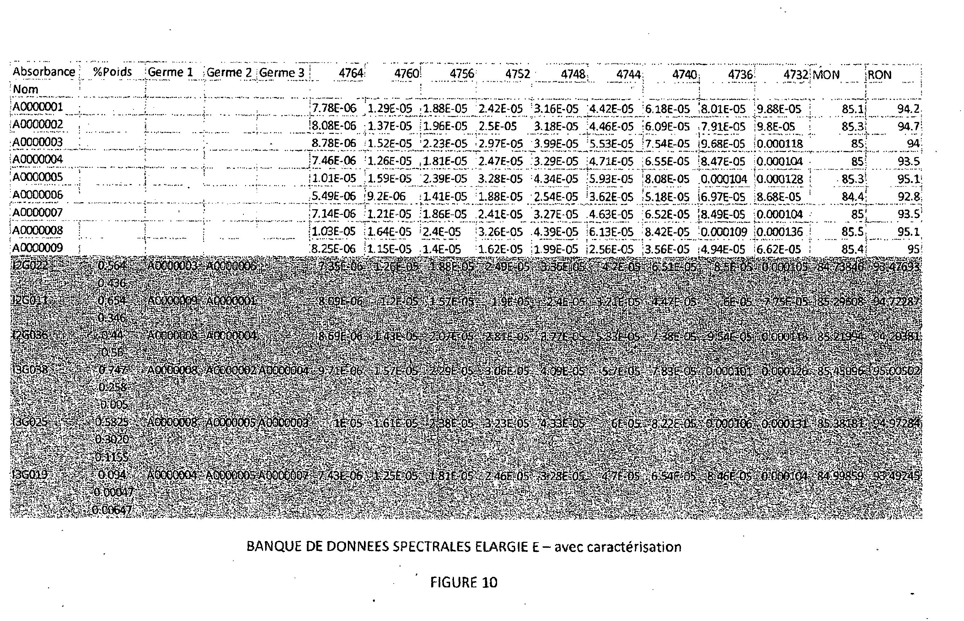

Ainsi, dans la présente invention, on rajoute à la banque de données spectrales les valeurs des propriétés désirées mesurées pour les dits étalons (et optionnellement des pôles); lorsque la banque de données spectrales est élargie, on calcule ensuite les valeurs des dites propriétés pour les étalons synthétiques intergermes (et optionnellement pour les extragermes) à partir des formules ayant servi à générer ces étalons synthétiques ; ce calcul se fait simplement en remplaçant les valeurs de grandeurs spectrales VGS par les valeurs mesurées des dites propriétés des étalons (et optionnellement des pôles)utilisés dans les formules (et optionnellement, pour les extragermes, par les valeurs déjà calculées pour les intergermes). On aboutit ainsi à une banque de données spectrales constituée d'un nombre de points (étalons et optionnellement intergermes, pôles et extragermes) auxquels sont associés les propriétés désirées (mesurées et calculées). Un exemple de réalisation (vue tronquée) est donné dans la figure 10.

Il s'agit à titre d'illustration d'une banque de données spectrales élargie E constituée d'étalons (A) et d'intergermes (IG). Le tableau a été complété au moyen des caractéristiques des produits cibles recherchées, à savoir les valeurs RON et MON (l'indice d'octane de recherche (RON) et l'indice d'octane de moteur (MON)). Ces caractéristiques ont donc été mesurées pour les étalons et calculées pour les intergermes.

Dans la description de EP0742900, on compare ensuite les signaux, par exemple les absorptions (ou leurs dérivées) pour l'échantillon inconnu, avec des signaux, par exemple les absorptions (ou leurs dérivées) à la même longueur d'onde des étalons, et on choisit les étalons ayant les différences les plus petites. Ensuite, on fait la moyenne des propriétés de ces étalons choisis pour déterminer la propriété de l'échantillon inconnu. On reconstitue donc un spectre calculé du produit cible auquel correspond la caractéristique (propriété) ainsi calculée.

Selon un mode d'exécution préféré de la présente invention, cette comparaison de signaux ne s'effectue donc pas sur l'entièreté de la banque de données spectrales mais uniquement sur la partie de banque de données spectrales représentative du sous-groupe homogène auquel l'échantillon appartient. C'est en utilisant de préférence la méthode de discrimination susmentionnée (agrégats discriminants) que cette partie de banque de données spectrales est définie.

Ensuite, on compare les signaux, par exemple les absorptions (ou leurs dérivées ou toute autre valeur de grandeur spectrale) pour l'échantillon inconnu (produit cible), avec les mêmes signaux et à la même longueur d'onde des étalons et/ou intergermes et/ou extragermes et/ou pôles appartenant au même sous-groupe homogène, et on choisit dans la banque de données spectrales les étalons et/ou intergermes et/ou extragermes et/ou pôles ayant les différences les plus petites.

Quelle que soit la méthode utilisée, nous appellerons par la suite les points proches du produit cible les points « proches voisins ». Ensuite, on peut par exemple faire la moyenne des propriétés de ces étalons et/ou intergermes et/ou extragermes et/ou pôles choisis pour déterminer la caractéristique recherchée (propriété) de l'échantillon inconnu. Selon un mode d'exécution particulier de la présente invention, les proches voisins choisis sont ceux ayant les plus petites valeurs moyennes de la différence absolue à chaque longueur d'onde i entre la valeur de grandeur spectrale (représentée à titre d'exemple par l'absorbance ou une dérivée de celle-ci) Wix pour le produit cible (échantillon / produit inconnu) et le signal correspondant Wim pour le proche voisin. Les moyennes peuvent se rapporter par exemple à la valeur moyenne de Wix-Wim (quel que soit son signe, à savoir une différence absolue), ou de (Wix-Wim)exp2. Pour chaque proche voisin dans la banque de données spectrales pour le type de produit en question, on trouve la différence moyenne telle que décrite et on choisit le proche voisin ayant les différences moyennes les plus petites, à savoir au moins 1 mais de préférence 2, jusqu'à 1000 des plus petites par exemple 2 à 100 ou 2 à 20 mais en particulier 2 à 10 et surtout 2 à 6 des plus petites. Cette sélection des plus proches voisins peut être effectuée selon toute méthode connue, par exemple on peut utiliser de manière avantageuse les méthodes décrites dans la description du brevet EP0742900 (par exemple en déterminant l'indice de proximité).

Selon un mode d'exécution particulier de la présente invention, le nombre de proches voisins peut être égal à 1, de préférence supérieur ou égal à 2, encore de préférence supérieur ou égal à 3.

Selon un mode d'exécution de la présente invention, le nombre de proches voisins est inférieur ou égal à 50, par exemple inférieur ou égal à 20, voir même 10.

Comme indiqué préalablement, à partir du moment où on a sélectionné les points « proches voisins », on peut facilement faire la moyenne des propriétés de ces proches voisins sélectionnés (étalons et/ou intergermes et/ou extragermes et/ou pôles) pour déterminer la propriété de l'échantillon inconnu (le produit cible). On reconstitue donc un spectre calculé du produit cible auquel correspond la caractéristique (propriété) ainsi calculée.

Toutefois, et ceci constitue un mode préféré d'exécution de la présente invention, la Demanderesse a découvert de manière inattendue une amélioration significative de la précision et robustesse de sa méthode lors de la détermination de la caractéristique recherchée (par exemple, une propriété) d'un produit cible lorsqu'on effectue une moyenne pondérée des propriétés de ces points « proches voisins » (qu'ils soient étalons et/ou intergermes et/ou extragermes et/ou pôles), la dite pondération étant une fonction inversement proportionnelle linéaire ou non-linéaire à la distance entre l'échantillon (« le produit cible ») et les points « proches voisins » sélectionnés ; cette pondération peut par exemple se représenter par la formule

$$POND \;=\; \frac{\frac{1}{di^{\alpha}}}{\sum_{1}^{n}\frac{1}{di^{\alpha}}}$$

Avec □ étant un nombre positif de préférence compris entre 0.5 et 1.5,
di étant la distance entre le produit cible et le proche voisin i, et
n étant le nombre total de proches voisins.

On applique donc une pondération de ce type aux propriétés mesurées (et optionnellement calculées) des « proches voisins » pour obtenir la propriété du produit cible.

On reconstitue donc un spectre calculé du produit cible auquel correspond la caractéristique (propriété) ainsi calculée.

En d'autres termes, le calcul de la caractéristique Z du produit cible se fait grâce aux caractéristiques correspondantes Zi des points proches voisins, tout en donnant aux caractéristiques des dits points proches voisins un poids d'autant plus important dans le dit calcul qu'ils sont plus proches du produit cible.

Ainsi, la présente invention concerne également une méthode de caractérisation d'un produit cible comprenant les étapes suivantes :

1. Constitution d'une banque de données spectrales comprenant des échantillons, leurs spectres et leurs caractéristiques mesurées (« CAR », par exemple la propriété « P »),
2. Analyse spectrale du produit cible et comparaison du spectre obtenu (Spectre PC) avec les données spectrales de la banque de données,
3. Identification des points « proches voisins » du produit cible, et

4. Calcul par topologie de la caractéristique du produit cible (CARpc/top , par exemple la propriété Ppc/top) en fonction des caractéristiques correspondantes des points proches voisins,

**caractérisé en ce que** le calcul de l'étape 4 est basé sur une pondération liée à l'inverse de la distance entre le produit cible et les points proches voisins.

On peut utiliser la méthode de l'invention pour déterminer plus d'une propriété P à la fois, par exemple au moins 2, en particulier de 1 à 30 par exemple 2 à 10 propriétés à la fois. On pourra bien évidemment utiliser des nombres différents d'étalons choisis pour chaque propriété.

Selon un autre mode préféré d'exécution de la présente invention, la Demanderesse a découvert une méthode alternative particulièrement efficace.

Cette méthode consiste à combiner l'une des méthodes topologiques de caractérisation du produit cible susmentionnées avec n'importe quel modèle mathématique différent des méthodes topologiques (de préférence un modèle régressionnel) et permettant de caractériser le produit cible à partir des valeurs de grandeurs spectrales VGS (pour la même propriété).

Cette méthode implique donc la constitution préalable d'un modèle mathématique qui permet de calculer les propriétés des produits en fonction des valeurs de grandeur spectrale (VGS) de la banque de données, de préférence un modèle régressionnel (de caractérisation de produit à partir de la banque de données spectrales préétablie) ; cette banque de données spectrales peut être soit la banque de données A susmentionnée ou de préférence la banque de données E, EE ou EEI, ou une sélection des dites banques. De préférence, cette banque de données sera la même que celle qui a servi pour la méthode topologique.

Cette méthode alternative pour caractériser un produit cible comprend les étapes suivantes :

1. Constitution d'une banque de données spectrales comprenant des échantillons, leurs spectres et leurs caractéristiques mesurées (« CAR », par exemple la propriété « P »),

2. Analyse spectrale du produit cible et comparaison du spectre obtenu (Spectre PC) avec les données spectrales de la banque de données,

3. Identification des points « proches voisins » du produit cible,

4. Calcul par topologie

4.1. de la caractéristique du produit cible (CARpc/top , par exemple la propriété Ppc/top), et

4.2. de son spectre ainsi calculé (spectre PCcale),

5. Etablissement à partir de la banque de données spectrales d'un modèle mathématique permettant de calculer la caractéristique d'un produit à partir de la banque de données spectrales (CAR/mod, par exemple propriété P/mod),

6. Calcul de la caractérisation du produit cible PC en suivant la formule suivante

$$ CARpc = CARpc/top + [\ CARpc/mod - CARpccalc/mod\ ] $$

avec

- CARpc étant la valeur calculée de la caractéristique du produit cible recherchée,
- CARpc/top étant la valeur calculée par topologie (points proches voisins) de la caractéristique du produit cible,
- CARpc/mod étant la valeur calculée par le modèle mathématique de la caractéristique du produit cible, et
- CARpecalc/mod étant la valeur calculée par le modèle mathématique de la caractéristique du produit cible calculé (au moyen des données spectrales obtenues au point 4.2).

La caractérisation d'un produit selon la présente invention peut donc consister en une détermination et/ou une prédiction de toute caractéristique chimique, physique ou physico-chimique du dit produit et/ou l'identification d'un type et/ou famille de produits.

On peut par exemple déterminer la présence de composés chimiques individuels au sein d'une composition ainsi que leurs concentrations ; on peut également déterminer toute sorte de propriété dont certaines sont exemplifiées ci-après.

Ainsi on peut utiliser la méthode pour la détermination physico-chimique ou la prédiction en ce qui concerne au moins une charge d'alimentation ou un produit utilisé dans un processus industriel du raffinage du pétrole et/ou dans des opérations pétrochimiques ou obtenu à l'aide de ceux-ci. Le processus peut être une conversion d'hydrocarbure ou un processus de séparation, de préférence un processus de reformage ou de craquage catalytique ou d'hydrotraitement ou de distillation ou mélange. En particulier, on peut l'utiliser pour déterminer au moins une propriété d'une charge d'alimentation et/ou la prédiction et/ou la détermination d'au moins une propriété et/ou un rendement d'un produit provenant d'un certain nombre de processus différents tels que des processus pour séparer des produits pétroliers tels que la distillation atmosphérique, la distillation sous vide ou la séparation par distillation, sous une pression supérieure à la pression atmosphérique, ainsi que la conversion thermique ou catalytique, sans ou avec hydrogénation partielle ou totale, d'un produit pétrolier, telle que le craquage catalytique par exemple le craquage catalytique de fluide (FCC), l'hydrocraquage, le reformage, l'isomérisation, l'hydrogénation sélective, la viscoréduction ou l'alkylation.

L'utilisation de la méthode dans des opérations de mélange impliquant la production et/ou la détermination d'au moins une propriété d'un mélange d'hydrocarbures liquides (éventuellement avec d'autres additifs tels que des éthers alkyliques) est d'une valeur particulière, cette méthode comprenant ou non la détermination pour chaque constituant du mélange d'un indice de mélange pour la propriété envisagée. Dans cette méthode telle qu'appliquée au mélange, on peut obtenir simplement par calcul les indices de mélange et sans avoir besoin de préparer des mélanges physiques d'étalons autres que ceux contenus dans la base de données. On peut combiner linéairement ou non linéairement les indices de mélange dans les domaines de stabilité afin de déterminer à partir de la valeur de cette combinaison, une valeur pour au moins une propriété du mélange obtenu. On peut réaliser le mélange en mélangeant au moins deux composés parmi le butane, l'essence vapocraquée hydrogénée, l'isomérat, le reformat, MTBE ou TAME, l'essence dérivée par FCC. On peut répéter ce processus en ajoutant numériquement les autres constituants séparément à la base d'hydrocarbure liquide pour déterminer une série d'indices de mélange et ensuite déterminer à partir de ces indices les propriétés du mélange multi-constituants.

Des exemples de propriétés que l'on peut déterminer et/ou prévoir sont les suivants: pour les carburants/essences d'automobiles, au moins l'un parmi l'indice d'octane de recherche (RON), l'indice d'octane de moteur (MON) et/ou leur moyenne arithmétique, avec ou sans additif au plomb et/ou la teneur en éther méthyl-t-butylique ou en éther methylisoamylique et/ou en benzène.

Pour les carburants/essences d'automobiles, au moins l'un parmi la tension de vapeur, la masse volumique, la volatilité, la courbe de distillation, par exemple le pourcentage distillé à 70°C et/ou à 100°C, la teneur en oxygène ou la teneur en benzène ou en soufre, la composition chimique et/ou la teneur en gomme par exemple exprimée en mg/100 ml et/ou la sensibilité au plomb (on détermine en particulier ces propriétés pour les utiliser dans les opérations de mélange).

Pour les carburants diesel ou gazole, au moins l'un parmi l'indice de cétane (par exemple, mesure au niveau du moteur), l'indice de cétane calculé, le point de trouble, le "point de décharge", l'aptitude au filtrage, la courbe de distillation, la masse volumique par exemple à 15°C, le point éclair, la viscosité par exemple à 40°C, la composition chimique, la sensibilité aux additifs et le pourcentage de soufre.

Pour les produits de distillation provenant du pétrole brut par exemple sous pression atmosphérique, au moins l'un parmi la masse volumique, le pourcentage de soufre, la viscosité à 100°C, la courbe de distillation, la teneur en paraffine, la teneur résiduelle en carbone ou la teneur en carbone de Conradson, la teneur en naphte, le point éclair de l'huile, le point de trouble pour le gazole, par exemple le gazole léger et/ou la viscosité à 100°C et/ou la teneur en soufre pour les résidus atmosphériques et le rendement pour au moins une des coupes, l'essence (Eb. 38 à 95°C), le benzène (Eb. 95 à 149°C), le naphta (Eb. 149 a 175 C), le kérosène (Eb. 175 à 232°C), le gazole léger (Eb. 232 à 342°C), le gazole lourd (Eb. 342 à 369°C) et celui du résidu atmosphérique supérieur à 369°C.

Pour au moins l'un parmi une charge d'alimentation ou un produit d'un processus de craquage catalytique par exemple un processus FCC, au moins l'un parmi la masse volumique, le pourcentage en soufre, le point d'aniline, l'indice de gazole, l'indice d'essence, la viscosité à 100°C, l'indice de réfraction à 20°C et/ou à 60°C, la masse moléculaire, la température de distillation par exemple la température de distillation à 50%, le pourcentage en carbone aromatique, la teneur totale en azote et les facteurs caractérisant l'aptitude de la charge d'alimentation au craquage par exemple le KUOP, le facteur de craquabilite, le facteur de cokabilite, et le rendement par exemple en gaz, en essence, en gazole ou en résidu. Ainsi on peut déterminer les rendements et/ou les propriétés des différents produits obtenus par la distillation de produits craques tels que RON et/ou MON, sans additif antidétonant ou plombes pour la coupe d'essence et la viscosité à 100°C pour le résidu de distillation.

Pour au moins l'un parmi un produit ou une charge d'alimentation d'un processus de reformage catalytique, au moins l'un parmi la masse volumique, la température de distillation et/ou la composition chimique (exprimée en pourcentage) des hydrocarbures satures linéaires, des isoparaffines, des naphtènes, des substances aromatiques et des oléfines.

Pour au moins l'un parmi un produit ou une charge d'alimentation d'un processus d'hydrogénation d'essence, au moins l'un parmi la masse volumique, la température de distillation, RON et/ou MON, la tension de vapeur d'essence sans additif antidétonant ou plombée, la volatilité, la composition chimique (exprimée en pourcentage), en hydrocarbures saturés linéaires, en isoparaffines, en naphtènes, en substances aromatiques par exemple le benzène et les benzènes mono/di-substitues, en oléfines par exemple les oléfines cycliques et non cycliques, en dioléfines, et l'indice d'anhydride maléique.

**Revendications**

1. Méthode de génération et d'optimisation d'une banque de données spectrales pouvant servir dans un procédé de caractérisation d'un produit cible par analyse spectrale topologique à partir d'un nombre limité d'étalons disponibles, méthode consistant dans une première étape

- à effectuer la même analyse spectrale sur les dits étalons, et
- à constituer à partir des spectres obtenus une banque de données spectrales A à plusieurs longueurs d'onde et/ou gammes de longueurs d'onde,

caractérisée dans une seconde étape optionnelle en ce qu'on élimine de la banque de données spectrales A les longueurs d'onde et/ou gammes de longueurs d'onde « polluantes » de la dite banque de données spectrales A, seconde étape consistant

1. à répéter au moins deux fois, de préférence au moins trois fois, plus préférentiellement au moins cinq fois la même analyse spectrale que celle effectuée lors de la première étape, et ceci sur au moins un des étalons disponibles, de préférence sur au moins deux ou même sur la totalité des dits étalons disponibles ;
2. à construire une banque de données spectrales B à partir des mesures effectuées au point 1 ci-dessus ;
3. à calculer pour chaque étalon sélectionné au point 1 ci-dessus et pour chaque longueur d'onde et/ou gamme de longueur d'onde (de la banque de données spectrales A) les écarts-type ($\sigma$) des mesures enregistrées dans la banque de données B ;
4. à identifier dans la banque de données B les longueurs d'onde et/ou gamme de longueur d'onde pour lesquelles l'écart-type est supérieur à une valeur prédéterminée ; et
5. à supprimer de la banque de données spectrales A les mesures correspondant aux longueurs d'onde identifiées au point 4 ci-dessus et obtenir ainsi une banque de données spectrales améliorée A',

et également **caractérisée par** une troisième étape consécutive qui consiste en l'élargissement de la banque de données spectrales A (ou de la banque de données spectrales améliorée A'), étape consistant à effectuer des combinaisons de plusieurs étalons de la première étape et à peupler la banque de données spectrales A (ou la banque de données spectrales améliorée A') au moyen des dites combinaisons (appelées étalons synthétiques ou intergermes « IG ») et obtenir ainsi une banque de données spectrales élargie E.

2. Méthode selon la revendication 1 **caractérisée par** une quatrième étape consécutive qui consiste en l'élargissement de la banque de données spectrales E, étape consistant dans une première séquence à rajouter à la banque de données spectrales élargie E au moins un spectre correspondant à au moins un des composés chimiques (ou plusieurs) du produit cible (aussi appelé « Pôle(s) ») et dans une seconde séquence à effectuer des combinaisons mathématiques du(des) dit(s) Pôle(s) avec au moins un étalon G de la première étape et/ou au moins un des étalons IG de la troisième étape et à peupler la banque de données spectrales E au moyen des dites combinaisons (appelées respectivement soit étalons synthétiques extragermes « EG », soit étalons synthétiques extragermes' « EG' » ) et obtenir ainsi une banque de données spectrales élargie EE (ou EEI).

3. Méthode selon l'une quelconque des revendications précédentes **caractérisée en ce que** la génération d'un étalon synthétique (IG) à partir des étalons G (auxquels correspondent les VGS) est effectuée au moyen de la formule

$$[\Sigma\ Ri\ x\ VGSi]\ /\ [\Sigma\ Ri]$$

pour i étant un nombre entier allant de 1 au nombre d'étalons G choisis pour cette combinaison et R étant un nombre réel tel que

$$[\Sigma\ Ri] > 0,$$

et

$$|[\Sigma\ R*i]|\ /\ [\Sigma\ Ri]\quad <\quad 0.3\ ,\ \text{de préférence} < 0.15,$$

et

avec R* représentant uniquement les nombres réels négatifs ; et de préférence, au moins un des Ri est un réel négatif (R*).

4. Méthode selon l'une quelconque des revendications 2 et 3 **caractérisée en ce que** la génération d'un étalon synthétique (EG) à partir des étalons G (auxquels correspondent les VGS) et d'au moins un Pôle est effectuée au moyen de la formule

$$[\Sigma\, Ri \times VGSi + \Sigma\, Rj \times VGSj] / [\Sigma\, Ri + \Sigma\, Rj]$$

pour i étant un nombre entier allant de 1 au nombre d'étalons G choisis pour cette combinaison, j étant un nombre entier allant de 1 au nombre de Pôle(s) choisis pour cette combinaison et R étant un nombre réel tel que

$$[\Sigma\, Ri + \Sigma\, Rj] > 0,$$

et

$$|[\Sigma\, R^*i]| / [\Sigma\, Ri + \Sigma\, Rj] \quad < \quad 0.3 \text{ , de préférence} < 0.15, \quad (I)$$

avec R* représentant uniquement les nombres réels négatifs,
ET de préférence chaque Rj doit être tel que le rapport Rj / [Σ Ri + Σ Rj] soit toujours compris entre l'opposé de la teneur minimale et la teneur maximale en pourcentage en poids du Pôles j dans le produit cible ; et de préférence, au moins un des Ri est un réel négatif (R*).

5. Méthode selon l'une quelconque des revendications 2 et 3 **caractérisée en ce que** la génération d'un étalon synthétique (EG') à partir des étalons synthétiques IG, d'au moins un Pôle et, optionnellement à partir des étalons G, est effectuée au moyen de la formule [Σ Ri x VGSi + Σ Rj x VGSj + Σ Rk x VGSk] / [Σ Ri + Σ Rj + Σ Rk] pour k étant un nombre entier allant de 1 au nombre d'étalons synthétiques IG choisis pour cette combinaison, i étant un nombre entier allant de 0 (de préférence 1) au nombre d'étalons G choisis pour cette combinaison, j étant un nombre entier allant de 1 au nombre de Pôle(s) choisis pour cette combinaison et R étant un nombre réel tel que

$$[\Sigma\, Ri + \Sigma\, Rj + \Sigma\, Rk] > 0,$$

et

$$|[\Sigma\, R^*i] + [\Sigma\, R^*k]| / [\Sigma\, Ri + \Sigma\, Rj + \Sigma\, Rk] \quad < \quad 0.3 \text{ , de préférence} < 0.15, \quad (II)$$

avec Rk étant de préférence toujours positif,
avec R* représentant uniquement les nombres réels négatifs,
ET de préférence chaque Rj doit être tel que le rapport Rj / [Σ Ri + Σ Rj + Σ Rk] soit toujours compris entre l'opposé de la teneur minimale et la teneur maximale en pourcentage en poids du Pôles j dans le produit cible ; et, de préférence, au moins un des Ri est un réel négatif (R*).

6. Méthode selon l'une quelconque des revendications précédentes **caractérisée en ce que** l'analyse spectrale est de type proche infrarouge.

7. Méthode selon l'une quelconque des revendications précédentes **caractérisée en ce que** les données spectrales sont sélectionnées parmi les absorbances, transmittances, réflectances ou densités optiques.

8. Méthode selon l'une quelconque des revendications précédentes **caractérisée en ce que** le nombre d'étalons disponibles pour constituer la banque de données A est inférieur à 100, voire inférieur à 60 ou même inférieur à 50.

**9.** Méthode selon la revendication 8 **caractérisée en ce que** le nombre d'étalons disponibles pour constituer la banque de données A est inférieur à 40 étalons disponibles, voire moins de 30 ou même moins de 20.

**10.** Méthode selon l'une quelconque des revendications 2 à 9 **caractérisée en ce que en ce que** le nombre de pôles est inférieur à 0,2 fois le nombre d'étalons, par exemple inférieur à 0,1 fois le nombre d'étalons.

**11.** Méthode selon l'une quelconque des revendications précédentes **caractérisée en ce que** la seconde étape est effectuée et **en ce qu'**on supprime de la banque de données les longueurs d'onde polluantes, à savoir les données spectrales aux longueurs d'onde pour lesquelles la valeur des ratios ($\sigma$/(VGSm/100)) est supérieure à 2% (de préférence supérieure à 1,5% ou même 1%).

**12.** Utilisation d'une banque de données spectrales obtenue par la méthode selon l'une quelconque des revendications 1 à 11 pour caractériser un produit cible.

**13.** Utilisation selon la revendication 12 **caractérisée en ce que** la méthode de caractérisation du produit cible comprend les étapes suivantes :

1. Constitution d'une banque de données spectrales comprenant des échantillons, leurs spectres et leurs caractéristiques mesurées (« CAR », par exemple la propriété « P »),
2. Analyse spectrale du produit cible et comparaison du spectre obtenu (Spectre PC) avec les données spectrales de la banque de données,
3. Identification des points « proches voisins » du produit cible, et
4. Calcul par topologie de la caractéristique du produit cible (CARpc/top , par exemple la propriété Ppc/top) en fonction des caractéristiques correspondantes des points proches voisins,

**caractérisé en ce que** le calcul de l'étape 4 est basé sur une pondération liée à l'inverse de la distance entre le produit cible et les points proches voisins.

**14.** Utilisation selon la revendication 12 **caractérisée en ce que** la méthode de caractérisation du produit cible comprend les étapes suivantes :

1. Constitution d'une banque de données spectrales comprenant des échantillons, leurs spectres et leurs caractéristiques mesurées (« CAR », par exemple la propriété « P »),
2. Analyse spectrale du produit cible et comparaison du spectre obtenu (Spectre PC) avec les données spectrales de la banque de données,
3. Identification des points « proches voisins » du produit cible,
4. Calcul par topologie

4.1. de la caractéristique du produit cible (CARpc/top, par exemple la propriété Ppc/top), et
4.2. de son spectre ainsi calculé (spectre PCcale),

5. Etablissement à partir de la banque de données spectrales d'un modèle mathématique permettant de calculer la caractéristique d'un produit à partir de la banque de données spectrales (CAR/mod, par exemple propriété P/mod),
6. Calcul de la caractérisation du produit cible PC en suivant la formule suivante

$$CARpc = CARpc/top + [\ CARpc/mod - CARpccalc/mod\ ]$$

avec

- CARpc étant la valeur calculée de la caractéristique du produit cible recherchée,
- CARpc/top étant la valeur calculée par topologie (points proches voisins) de la caractéristique du produit cible,
- CARpc/mod étant la valeur calculée par le modèle mathématique de la caractéristique du produit cible, et
- CARpecale/mod étant la valeur calculée par le modèle mathématique de la caractéristique du produit cible calculé (au moyen des données spectrales obtenues au point 4.2).

FIGURE 1

| Absorbances | Nombre d'onde (cm-1) | 4776 | 4772 | 4768 | 4764 | 4760 | 4756 | 4752 | 4748 | 4744 | 4740 | 4736 | 4732 | 4728 |
|---|---|---|---|---|---|---|---|---|---|---|---|---|---|---|
| Etalon | | | | | | | | | | | | | | |
| A0000001 | | 0.00000131 | 0.00000234 | 0.00000471 | 0.00000778 | 0.00001291 | 0.00001881 | 0.00002420 | 0.00003164 | 0.00004422 | 0.00006178 | 0.00008012 | 0.00009882 | 0.00011603 |
| A0000002 | | 0.00000154 | 0.00000300 | 0.00000484 | 0.00000808 | 0.00001365 | 0.00001962 | 0.00002497 | 0.00003183 | 0.00004456 | 0.00006093 | 0.00007915 | 0.00009801 | 0.00011606 |
| A0000003 | | 0.00000131 | 0.00000284 | 0.00000512 | 0.00000878 | 0.00001523 | 0.00002234 | 0.00002966 | 0.00003987 | 0.00005529 | 0.00007543 | 0.00009683 | 0.00011817 | 0.00013911 |
| A0000004 | | 0.00000028 | 0.00000173 | 0.00000375 | 0.00000746 | 0.00001259 | 0.00001808 | 0.00002468 | 0.00003287 | 0.00004706 | 0.00006552 | 0.00008471 | 0.00010404 | 0.00012267 |
| A0000005 | | 0.00000152 | 0.00000346 | 0.00000608 | 0.00001005 | 0.00001590 | 0.00002388 | 0.00003277 | 0.00004342 | 0.00005927 | 0.00008077 | 0.00010398 | 0.00012785 | 0.00014973 |
| A0000006 | | 0.00000025 | 0.00000137 | 0.00000276 | 0.00000549 | 0.00000920 | 0.00001410 | 0.00001884 | 0.00002541 | 0.00003622 | 0.00005183 | 0.00006968 | 0.00008685 | 0.00010424 |
| A0000007 | | 0.00000115 | 0.00000192 | 0.00000381 | 0.00000714 | 0.00001208 | 0.00001862 | 0.00002413 | 0.00003267 | 0.00004633 | 0.00006518 | 0.00008486 | 0.00010414 | 0.00012311 |
| A0000008 | | 0.00000145 | 0.00000286 | 0.00000597 | 0.00001025 | 0.00001641 | 0.00002401 | 0.00003255 | 0.00004393 | 0.00006125 | 0.00008424 | 0.00010897 | 0.00013581 | 0.00016053 |
| A0000009 | | 0.00000196 | 0.00000443 | 0.00000613 | 0.00000825 | 0.00001145 | 0.00001403 | 0.00001617 | 0.00001990 | 0.00002562 | 0.00003560 | 0.00004941 | 0.00006621 | 0.00008322 |

:

:

| Absorbances | Nombre d'onde (cm-1) | 4352 | 4348 | 4344 | 4340 | 4336 | 4332 | 4328 | 4324 | 4320 | 4316 | 4312 | 4308 | 4304 |
|---|---|---|---|---|---|---|---|---|---|---|---|---|---|---|
| Etalon | | | | | | | | | | | | | | |
| A0000001 | | 0.00966521 | 0.01052209 | 0.01158039 | 0.01273609 | 0.01366893 | 0.01401955 | 0.01384877 | 0.01353086 | 0.01333914 | 0.01318977 | 0.01295103 | 0.01250628 | 0.01190033 |
| A0000002 | | 0.00962570 | 0.01045172 | 0.01147713 | 0.01259841 | 0.01351549 | 0.01386926 | 0.01370155 | 0.01337238 | 0.01316494 | 0.01301322 | 0.01279028 | 0.01237890 | 0.01181515 |
| A0000003 | | 0.00971714 | 0.01051752 | 0.01151046 | 0.01260728 | 0.01350349 | 0.01385874 | 0.01371417 | 0.01342094 | 0.01323014 | 0.01306308 | 0.01280913 | 0.01238076 | 0.01181617 |
| A0000004 | | 0.00970203 | 0.01053299 | 0.01156151 | 0.01269044 | 0.01360349 | 0.01396508 | 0.01381938 | 0.01353130 | 0.01333327 | 0.01313686 | 0.01284140 | 0.01236973 | 0.01178167 |
| A0000005 | | 0.00983396 | 0.01059963 | 0.01155613 | 0.01260533 | 0.01346771 | 0.01381668 | 0.01367895 | 0.01339166 | 0.01320615 | 0.01304760 | 0.01281606 | 0.01240677 | 0.01184798 |
| A0000006 | | 0.00975312 | 0.01059458 | 0.01165282 | 0.01283536 | 0.01379368 | 0.01414591 | 0.01392945 | 0.01352795 | 0.01322576 | 0.01296382 | 0.01265066 | 0.01220577 | 0.01166779 |
| A0000007 | | 0.00971298 | 0.01053791 | 0.01157010 | 0.01271768 | 0.01364754 | 0.01400085 | 0.01381945 | 0.01347245 | 0.01322868 | 0.01300856 | 0.01271797 | 0.01227517 | 0.01172447 |
| A0000008 | | 0.00973713 | 0.01055416 | 0.01158105 | 0.01271146 | 0.01362481 | 0.01395885 | 0.01376642 | 0.01341727 | 0.01316979 | 0.01298435 | 0.01274264 | 0.01233134 | 0.01177974 |
| A0000009 | | 0.00973863 | 0.01054689 | 0.01155098 | 0.01265425 | 0.01355805 | 0.01391147 | 0.01373056 | 0.01336471 | 0.01310149 | 0.01290984 | 0.01267387 | 0.01227335 | 0.01172989 |

BANQUE DE DONNEES SPECTRALES A

FIGURE 2

| Longueur d'onde VGS | W1 | W2 | W3 | W4 | W5 | W6 | W7 | W8 | W9 |
|---|---|---|---|---|---|---|---|---|---|
| | 1.52455E-07 | 5.98E-06 | 5.43E-06 | 9.39E-06 | 1.38E-05 | 2.07E-05 | 2.62E-05 | 3.04E-05 | 4.14E-05 |
| | 1.12042E-07 | 6.81E-06 | 5.33E-06 | 9.54E-06 | 1.46E-05 | 2.15E-05 | 2.69E-05 | 3.11E-05 | 4.18E-05 |
| | 1.55755E-06 | 4.53E-06 | 6.07E-06 | 9.07E-06 | 1.45E-05 | 2.07E-05 | 2.6E-05 | 3.13E-05 | 4.12E-05 |
| | 4.15098E-08 | 6.65E-06 | 5.33E-06 | 9.63E-06 | 1.45E-05 | 2.09E-05 | 2.62E-05 | 3.12E-05 | 4.14E-05 |
| | 1.28445E-07 | 6.52E-06 | 5.19E-06 | 9.68E-06 | 1.46E-05 | 2.21E-05 | 2.7E-05 | 3.08E-05 | 4.2E-05 |
| | 1.52686E-06 | 4.24E-06 | 6.16E-06 | 8.66E-06 | 1.36E-05 | 1.97E-05 | 2.57E-05 | 3.07E-05 | 4.05E-05 |
| | 1.45709E-06 | 4.02E-06 | 6.06E-06 | 9.18E-06 | 1.47E-05 | 2.04E-05 | 2.63E-05 | 3.14E-05 | 4.1E-05 |
| | 1.8449E-06 | 4.52E-06 | 5.79E-06 | 8.99E-06 | 1.43E-05 | 2.02E-05 | 2.62E-05 | 3.16E-05 | 4.17E-05 |
| | 1.73044E-06 | 4.4E-06 | 6.12E-06 | 8.94E-06 | 1.42E-05 | 2.04E-05 | 2.63E-05 | 3.11E-05 | 4.07E-05 |
| | 1.11909E-06 | 3.85E-06 | 6.37E-06 | 9.31E-06 | 1.43E-05 | 2.08E-05 | 2.59E-05 | 3.07E-05 | 4.07E-05 |
| VGSm | 9.67038E-07 | 5.15E-06 | 5.79E-06 | 9.24E-06 | 1.43E-05 | 2.07E-05 | 2.63E-05 | 3.11E-05 | 4.12E-05 |
| $\sigma$ | 7.6254E-07 | 1.19E-06 | 4.27E-07 | 3.31E-07 | 3.79E-07 | 6.75E-07 | 4.21E-07 | 3.79E-07 | 4.99E-07 |
| $\frac{m}{\sigma} \times 100$ | 78.85 | 23.09 | 7.38 | 3.58 | 2.65 | 3.26 | 1.60 | 1.22 | 1.21 |

BANQUE DE DONNEES SPECTRALES B

FIGURE 3

EP 2 799 841 A1

| Absorbances / Etalon | Nombre d'onde (cm-1) | 4776 | 4772 | 4768 | 4764 | 4760 | 4756 | 4752 | 4748 | 4744 | 4740 | 4736 | 4732 | 4728 |
|---|---|---|---|---|---|---|---|---|---|---|---|---|---|---|
| A0000001 | | 0.00000131 | 0.00000234 | 0.00000471 | 0.00000778 | 0.00001291 | 0.00001881 | 0.00002420 | 0.00003164 | 0.00004422 | 0.00006178 | 0.00008012 | 0.00009882 | 0.00011603 |
| A0000002 | | 0.00000154 | 0.00000300 | 0.00000484 | 0.00000808 | 0.00001365 | 0.00001962 | 0.00002497 | 0.00003183 | 0.00004456 | 0.00006093 | 0.00007915 | 0.00009801 | 0.00011606 |
| A0000003 | | 0.00000131 | 0.00000284 | 0.00000512 | 0.00000878 | 0.00001523 | 0.00002234 | 0.00002966 | 0.00003987 | 0.00005529 | 0.00007543 | 0.00009683 | 0.00011817 | 0.00013911 |
| A0000004 | | 0.00000028 | 0.00000173 | 0.00000375 | 0.00000746 | 0.00001259 | 0.00001808 | 0.00002468 | 0.00003287 | 0.00004706 | 0.00006552 | 0.00008471 | 0.00010404 | 0.00012267 |
| A0000005 | | 0.00000152 | 0.00000346 | 0.00000608 | 0.00001005 | 0.00001590 | 0.00002388 | 0.00003277 | 0.00004342 | 0.00005927 | 0.00008077 | 0.00010398 | 0.00012785 | 0.00014973 |
| A0000006 | | 0.00000025 | 0.00000137 | 0.00000276 | 0.00000549 | 0.00000920 | 0.00001410 | 0.00001884 | 0.00002541 | 0.00003622 | 0.00005183 | 0.00006968 | 0.00008685 | 0.00010424 |
| A0000007 | | 0.00000115 | 0.00000192 | 0.00000381 | 0.00000714 | 0.00001208 | 0.00001862 | 0.00002413 | 0.00003267 | 0.00004633 | 0.00006518 | 0.00008486 | 0.00010414 | 0.00012311 |
| A0000008 | | 0.00000145 | 0.00000286 | 0.00000597 | 0.00001025 | 0.00001641 | 0.00002401 | 0.00003255 | 0.00004393 | 0.00006125 | 0.00008424 | 0.00010897 | 0.00013581 | 0.00016053 |
| A0000009 | | 0.00000196 | 0.00000443 | 0.00000613 | 0.00000825 | 0.00001145 | 0.00001403 | 0.00001617 | 0.00001990 | 0.00002562 | 0.00003560 | 0.00004941 | 0.00006621 | 0.00008322 |

BANQUE DE DONNEES SPECTRALES AMELIOREE A'

FIGURE 4

EP 2 799 841 A1

| Absorbance Nom | %Poids | Germe 1 | Germe 2 | Germe 3 | 4764 | 4760 | 4756 | 4752 | 4748 | 4744 | 4740 | 4736 |
|---|---|---|---|---|---|---|---|---|---|---|---|---|
| A0000001 | | | | | 7.78E-06 | 1.29E-05 | 1.88E-05 | 2.42E-05 | 3.16E-05 | 4.42E-05 | 6.18E-05 | 8.01E-05 |
| A0000002 | | | | | 8.08E-06 | 1.37E-05 | 1.96E-05 | 2.5E-05 | 3.18E-05 | 4.46E-05 | 6.09E-05 | 7.91E-05 |
| A0000003 | | | | | 8.78E-06 | 1.52E-05 | 2.23E-05 | 2.97E-05 | 3.99E-05 | 5.53E-05 | 7.54E-05 | 9.68E-05 |
| A0000004 | | | | | 7.46E-06 | 1.26E-05 | 1.81E-05 | 2.47E-05 | 3.29E-05 | 4.71E-05 | 6.55E-05 | 8.47E-05 |
| A0000005 | | | | | 1.01E-05 | 1.59E-05 | 2.39E-05 | 3.28E-05 | 4.34E-05 | 5.93E-05 | 8.08E-05 | 0.000104 |
| A0000006 | | | | | 5.49E-06 | 9.2E-06 | 1.41E-05 | 1.88E-05 | 2.54E-05 | 3.62E-05 | 5.18E-05 | 6.97E-05 |
| A0000007 | | | | | 7.14E-06 | 1.21E-05 | 1.86E-05 | 2.41E-05 | 3.27E-05 | 4.63E-05 | 6.52E-05 | 8.49E-05 |
| A0000008 | | | | | 1.03E-05 | 1.64E-05 | 2.4E-05 | 3.26E-05 | 4.39E-05 | 6.13E-05 | 8.42E-05 | 0.000109 |
| A0000009 | | | | | 8.25E-06 | 1.15E-05 | 1.4E-05 | 1.62E-05 | 1.99E-05 | 2.56E-05 | 3.56E-05 | 4.94E-05 |
| I2G022 | 0.564 0.436 | A0000003 | A0000006 | | 7.35E-06 | 1.26E-05 | 1.88E-05 | 2.49E-05 | 3.38E-05 | 4.7E-05 | 6.51E-05 | 8.5E-05 |
| I2G011 | 0.654 0.346 | A0000009 | A0000001 | | 8.09E-06 | 1.2E-05 | 1.57E-05 | 1.9E-05 | 2.4E-05 | 3.21E-05 | 4.47E-05 | 6E-05 |
| I2G036 | 0.44 0.56 | A0000008 | A0000004 | | 8.69E-06 | 1.43E-05 | 2.07E-05 | 2.81E-05 | 3.77E-05 | 5.33E-05 | 7.38E-05 | 9.54E-05 |
| I3G038 | 0.747 0.258 -0.005 | A0000008 | A0000002 | A0000004 | 9.71E-06 | 1.57E-05 | 2.29E-05 | 3.06E-05 | 4.09E-05 | 5.7E-05 | 7.83E-05 | 0.000101 |
| I3G025 | 0.5825 0.3020 0.1155 | A0000008 | A0000005 | A0000003 | 1E-05 | 1.61E-05 | 2.38E-05 | 3.23E-05 | 4.33E-05 | 6E-05 | 8.22E-05 | 0.000106 |
| I3G019 | 0.094 -0.00047 0.00647 | A0000004 | A0000005 | A0000007 | 7.43E-06 | 1.25E-05 | 1.81E-05 | 2.46E-05 | 3.28E-05 | 4.7E-05 | 6.54E-05 | 8.46E-05 |

BANQUE DE DONNEES SPECTRALES ELARGIE E

FIGURE 5

| Absorbance Nom | Pole | Germe | %poids | 4764 | 4760 | 4756 | 4752 | 4748 | 4744 | 4740 | 4736 | 4732 |
|---|---|---|---|---|---|---|---|---|---|---|---|---|
| A0000001 | | | | 7.78E-06 | 1.29E-05 | 1.88E-05 | 2.42E-05 | 3.16E-05 | 4.42E-05 | 6.18E-05 | 8.01E-05 | 9.88E-05 |
| A0000002 | | | | 8.08E-06 | 1.37E-05 | 1.96E-05 | 2.5E-05 | 3.18E-05 | 4.46E-05 | 6.09E-05 | 7.91E-05 | 9.8E-05 |
| A0000003 | | | | 8.78E-06 | 1.52E-05 | 2.23E-05 | 2.97E-05 | 3.99E-05 | 5.53E-05 | 7.54E-05 | 9.68E-05 | 0.000118 |
| A0000004 | | | | 7.46E-06 | 1.26E-05 | 1.81E-05 | 2.47E-05 | 3.29E-05 | 4.71E-05 | 6.55E-05 | 8.47E-05 | 0.000104 |
| A0000005 | | | | 1.01E-05 | 1.59E-05 | 2.39E-05 | 3.28E-05 | 4.34E-05 | 5.93E-05 | 8.08E-05 | 0.000104 | 0.000128 |
| A0000006 | | | | 5.49E-06 | 9.2E-06 | 1.41E-05 | 1.88E-05 | 2.54E-05 | 3.62E-05 | 5.18E-05 | 6.97E-05 | 8.68E-05 |
| A0000007 | | | | 7.14E-06 | 1.21E-05 | 1.86E-05 | 2.41E-05 | 3.27E-05 | 4.63E-05 | 6.52E-05 | 8.49E-05 | 0.000104 |
| A0000008 | | | | 1.03E-05 | 1.64E-05 | 2.4E-05 | 3.26E-05 | 4.39E-05 | 6.13E-05 | 8.42E-05 | 0.000109 | 0.000136 |
| A0000009 | | | | 8.25E-06 | 1.15E-05 | 1.4E-05 | 1.62E-05 | 1.99E-05 | 2.56E-05 | 3.56E-05 | 4.94E-05 | 6.62E-05 |
| MEG001 | PAL054 | A0000009 | 0.15 | 4.45E-06 | 7.13E-06 | 9.35E-06 | 1.12E-05 | 1.44E-05 | 1.95E-05 | 2.84E-05 | 4.08E-05 | 5.62E-05 |
| MEG002 | PAL014 | A0000005 | -0.05 | 1.15E-05 | 1.78E-05 | 2.63E-05 | 3.57E-05 | 4.69E-05 | 6.36E-05 | 8.61E-05 | 0.00011 | 0.000135 |
| MEG003 | PAL035 | A0000008 | 0.08 | 8.11E-06 | 1.37E-05 | 2.06E-05 | 2.84E-05 | 3.88E-05 | 5.48E-05 | 7.6E-05 | 9.89E-05 | 0.000124 |
| MEG004 | PRF006 | A0000002 | 0.021655 | 8.65E-06 | 1.43E-05 | 2.03E-05 | 2.57E-05 | 3.26E-05 | 4.53E-05 | 6.16E-05 | 7.98E-05 | 9.88E-05 |
| MEG005 | PRF004 | A0000007 | -0.07268 | 4.86E-06 | 9.48E-06 | 1.56E-05 | 2.07E-05 | 2.94E-05 | 4.35E-05 | 6.29E-05 | 8.26E-05 | 0.000102 |
| MEG006 | PRF074 | A0000003 | 0.028752 | 9.54E-06 | 1.61E-05 | 2.33E-05 | 3.07E-05 | 4.07E-05 | 5.59E-05 | 7.58E-05 | 9.72E-05 | 0.000119 |

BANQUE DE DONNEES SPECTRALES ELARGIE EE

FIGURE 6

EP 2 799 841 A1

| Absorbance Nom | Germe1 | Germe2 | Germe3 | pole | %poids | 4764 | 4760 | 4756 | 4752 | 4748 | 4744 | 4740 |
|---|---|---|---|---|---|---|---|---|---|---|---|---|
| A0000001 | | | | | | 7.78E-06 | 1.29E-05 | 1.88E-05 | 2.42E-05 | 3.16E-05 | 4.42E-05 | 6.18E-05 |
| A0000002 | | | | | | 8.08E-06 | 1.37E-05 | 1.96E-05 | 2.5E-05 | 3.18E-05 | 4.46E-05 | 6.09E-05 |
| A0000003 | | | | | | 8.78E-06 | 1.52E-05 | 2.23E-05 | 2.97E-05 | 3.99E-05 | 5.53E-05 | 7.54E-05 |
| A0000004 | | | | | | 7.46E-06 | 1.26E-05 | 1.81E-05 | 2.47E-05 | 3.29E-05 | 4.71E-05 | 6.55E-05 |
| A0000005 | | | | | | 1.01E-05 | 1.59E-05 | 2.39E-05 | 3.28E-05 | 4.34E-05 | 5.93E-05 | 8.08E-05 |
| A0000006 | | | | | | 5.49E-06 | 9.2E-06 | 1.41E-05 | 1.88E-05 | 2.54E-05 | 3.62E-05 | 5.18E-05 |
| A0000007 | | | | | | 7.14E-06 | 1.21E-05 | 1.86E-05 | 2.41E-05 | 3.27E-05 | 4.63E-05 | 6.52E-05 |
| A0000008 | | | | | | 1.03E-05 | 1.64E-05 | 2.4E-05 | 3.26E-05 | 4.39E-05 | 6.13E-05 | 8.42E-05 |
| A0000009 | | | | | | 8.25E-06 | 1.15E-05 | 1.4E-05 | 1.62E-05 | 1.99E-05 | 2.56E-05 | 3.56E-05 |
| MEP001 | A0000002 | A0000006 | 0 | PAL031 | 0.56 / 0.34 / 0.1 | 4.86E-06 | 8.85E-06 | 1.35E-05 | 1.8E-05 | 2.41E-05 | 3.54E-05 | 5.04E-05 |
| MEP002 | A0000005 | A0000003 | 0 | PRF028 | 0.304 / 0.646 / 0.05 | 1.05E-05 | 1.68E-05 | 2.45E-05 | 3.24E-05 | 4.26E-05 | 5.78E-05 | 7.8E-05 |
| MEP003 | A0000005 | A0000008 | 0 | PRF063 | 1.1726 / -0.0926 / -0.08 | 8.68E-06 | 1.44E-05 | 2.21E-05 | 3.1E-05 | 4.19E-05 | 5.78E-05 | 7.97E-05 |
| MEP004 | A0000006 | A0000009 | A0000002 | PAL037 | 0.306 / -0.0530 / 0.647 / 0.1 | 4.89E-06 | 9.38E-06 | 1.46E-05 | 1.93E-05 | 2.55E-05 | 3.67E-05 | 5.17E-05 |
| MEP005 | A0000008 | A0000005 | A0000003 | PAL006 | 0.6062 / 0.314 / 0.1198 / -0.04 | 1.11E-05 | 1.76E-05 | 2.56E-05 | 3.44E-05 | 4.59E-05 | 6.33E-05 | 8.63E-05 |
| MEP006 | A0000002 | A0000006 | A0000005 | PRF025 | 0.273 / 0.4170 / 0.22 / 0.09 | 9.96E-06 | 1.52E-05 | 2.16E-05 | 2.8E-05 | 3.54E-05 | 4.75E-05 | 6.44E-05 |

BANQUE DE DONNEES SPECTRALES ELARGIE EEI

FIGURE 7

Agrégats

FIGURE 8

| Name | Kcy | Ksatu | Karo | Kiso | Kene | xxxx |
|---|---|---|---|---|---|---|
| CRK0071 | 124.2982 | 30.2213 | 6.1022 | 20.4044 | 22.6714 | |
| CRK0075 | 123.6416 | 30.3821 | 6.0959 | 20.0519 | 22.6293 | |
| CRK0098 | 123.3631 | 29.719 | 6.1168 | 21.0968 | 22.9267 | |
| CRK0102 | 122.6272 | 29.1777 | 6.1166 | 20.8441 | 23.3606 | |
| CRK0116 | 120.3105 | 29.5099 | 6.1134 | 21.0583 | 23.0629 | |
| HVY0068 | 144.4259 | 52.0212 | 5.9475 | 22.2027 | 13.5996 | |
| HVY0088 | 141.8204 | 47.8997 | 6.0091 | 23.0564 | 14.2034 | |
| HVY0093 | 143.0184 | 49.2953 | 5.9834 | 22.8627 | 14.0157 | |
| HVY0100 | 142.1157 | 48.486 | 5.9932 | 22.8486 | 14.183 | |
| HVY0106 | 143.3684 | 50.5179 | 5.9642 | 22.8179 | 13.8181 | |
| KER0072 | 114.2108 | 61.7041 | 5.8061 | 22.7724 | 13.9045 | |
| KER0076 | 112.7754 | 59.6154 | 5.8289 | 23.7607 | 14.191 | |
| KER0079 | 113.9782 | 56.389 | 5.8904 | 22.7878 | 14.299 | |
| KER0080 | 113.2538 | 57.5513 | 5.8681 | 23.0583 | 14.2554 | |
| KER0082 | 114.2399 | 62.3519 | 5.8108 | 23.6506 | 13.8976 | |
| LGT0067 | 130.8834 | 53.1217 | 5.9227 | 22.969 | 13.9002 | |
| LGT0087 | 129.4485 | 49.2411 | 5.9723 | 23.7952 | 14.4472 | |
| LGT0096 | 129.5462 | 48.6752 | 5.9809 | 23.382 | 14.5025 | |
| LGT0099 | 129.1717 | 48.8969 | 5.9775 | 23.6349 | 14.5186 | |
| LGT0105 | 129.4355 | 50.1752 | 5.9592 | 23.4217 | 14.267 | |

Tableau d'Agrégats

FIGURE 9

| Absorbance Nom | %Poids | Germe 1 | Germe 2 | Germe 3 | 4764 | 4760 | 4756 | 4752 | 4748 | 4744 | 4740 | 4736 | 4732 | MON | RON |
|---|---|---|---|---|---|---|---|---|---|---|---|---|---|---|---|
| A0000001 | | | | | 7.78E-06 | 1.29E-05 | 1.88E-05 | 2.42E-05 | 3.16E-05 | 4.42E-05 | 6.18E-05 | 8.01E-05 | 9.88E-05 | 85.1 | 94.2 |
| A0000002 | | | | | 8.08E-06 | 1.37E-05 | 1.96E-05 | 2.5E-05 | 3.18E-05 | 4.46E-05 | 6.09E-05 | 7.91E-05 | 9.8E-05 | 85.3 | 94.7 |
| A0000003 | | | | | 8.78E-06 | 1.52E-05 | 2.23E-05 | 2.97E-05 | 3.99E-05 | 5.53E-05 | 7.54E-05 | 9.68E-05 | 0.000118 | 85 | 94 |
| A0000004 | | | | | 7.46E-06 | 1.26E-05 | 1.81E-05 | 2.47E-05 | 3.29E-05 | 4.71E-05 | 6.55E-05 | 8.47E-05 | 0.000104 | 85 | 93.5 |
| A0000005 | | | | | 1.01E-05 | 1.59E-05 | 2.39E-05 | 3.28E-05 | 4.34E-05 | 5.93E-05 | 8.08E-05 | 0.000104 | 0.000128 | 85.3 | 95.1 |
| A0000006 | | | | | 5.49E-06 | 9.2E-06 | 1.41E-05 | 1.88E-05 | 2.54E-05 | 3.62E-05 | 5.18E-05 | 6.97E-05 | 8.68E-05 | 84.4 | 92.8 |
| A0000007 | | | | | 7.14E-06 | 1.21E-05 | 1.86E-05 | 2.41E-05 | 3.27E-05 | 4.63E-05 | 6.52E-05 | 8.49E-05 | 0.000104 | 85 | 93.5 |
| A0000008 | | | | | 1.03E-05 | 1.64E-05 | 2.4E-05 | 3.26E-05 | 4.39E-05 | 6.13E-05 | 8.42E-05 | 0.000109 | 0.000136 | 85.5 | 95.1 |
| A0000009 | | | | | 8.25E-06 | 1.15E-05 | 1.4E-05 | 1.62E-05 | 1.99E-05 | 2.56E-05 | 3.56E-05 | 4.94E-05 | 6.62E-05 | 85.4 | 95 |
| I2G022 | 0.564 0.436 | A0000003 | A0000006 | | 7.35E-06 | 1.26E-05 | 1.88E-05 | 2.49E-05 | 3.36E-05 | 4.7E-05 | 6.51E-05 | 8.5E-05 | 0.000105 | 84.73846 | 93.47693 |
| I2G011 | 0.654 0.346 | A0000009 | A0000001 | | 8.09E-06 | 1.22E-05 | 1.57E-05 | 1.9E-05 | 2.4E-05 | 3.21E-05 | 4.47E-05 | 6E-05 | 7.75E-05 | 85.29608 | 94.72987 |
| I2G036 | 0.44 0.56 | A0000008 | A0000004 | | 8.69E-06 | 1.43E-05 | 2.07E-05 | 2.81E-05 | 3.77E-05 | 5.33E-05 | 7.38E-05 | 9.54E-05 | 0.000118 | 85.21994 | 94.20381 |
| I3G038 | 0.747 0.258 0.005 | A0000008 | A0000002 | A0000004 | 9.71E-06 | 1.57E-05 | 2.29E-05 | 3.06E-05 | 4.09E-05 | 5.7E-05 | 7.83E-05 | 0.000101 | 0.000126 | 85.45096 | 95.00502 |
| I3G025 | 0.5825 0.3020 0.1155 | A0000008 | A0000005 | A0000003 | 1E-05 | 1.61E-05 | 2.38E-05 | 3.23E-05 | 4.33E-05 | 6E-05 | 8.22E-05 | 0.000106 | 0.000131 | 85.38181 | 94.97284 |
| I3G019 | 0.094 0.00047 0.00647 | A0000004 | A0000005 | A0000007 | 7.43E-06 | 1.25E-05 | 1.81E-05 | 2.46E-05 | 3.28E-05 | 4.7E-05 | 6.54E-05 | 8.46E-05 | 0.000104 | 84.99859 | 93.49249 |

BANQUE DE DONNEES SPECTRALES ELARGIE E – avec caractérisation

FIGURE 10

Europäisches
Patentamt

European
Patent Office

Office européen
des brevets

**RAPPORT DE RECHERCHE EUROPEENNE**

Numéro de la demande

EP 13 29 0099

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | WO 2006/126978 A1 (SAUDI ARABIAN OIL CO [SA]; ARAMCO SERVICES CO [US]; SONBUL YASER R [SA] 30 novembre 2006 (2006-11-30) * page 4, ligne 22 - page 5, ligne 5 * * page 10, ligne 1 - page 11, ligne 15 * ----- | 1,2,6-12 | INV. G01N21/35 |
| A,D | EP 0 742 900 A1 (BP CHEM INT LTD [GB]; BP OIL INT [GB]) 20 novembre 1996 (1996-11-20) * le document en entier * ----- | 1-13 | |

DOMAINES TECHNIQUES RECHERCHES (IPC)

G01N

Le présent rapport a été établi pour toutes les revendications

| Lieu de la recherche | Date d'achèvement de la recherche | Examinateur |
|---|---|---|
| La Haye | 28 octobre 2013 | Verdoodt, Erik |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
...........................................................
& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 13 29 0099

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

28-10-2013

| Document brevet cité au rapport de recherche | Date de publication | Membre(s) de la famille de brevet(s) | Date de publication |
|---|---|---|---|
| WO 2006126978 A1 | 30-11-2006 | AUCUN | |
| EP 0742900 A1 | 20-11-1996 | AUCUN | |

Pour tout renseignement concernant cette annexe : voir Journal Officiel de l'Office européen des brevets, No.12/82

**EP 2 799 841 A1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 0742900 A
- US 6897071 A
- US 6897071 B
- WO 9207326 A
- US 20100211329 A